# EUROPEAN PATENT APPLICATION

(11) **EP 4 694 354 A1**
(43) Date of publication of application: **11.02.2026**
(21) Application number: 24781327.2
(22) Date of filing: 29.03.2024
(51) Int. Cl.: H04W 40/22, H04W 40/24, H04W 8/00, H04W 76/14, H04W 88/04, H04W 92/18, H04W 72/543, H04W 72/25, H04W 28/02

(54) **METHOD BY WHICH TERMINAL ESTABLISHES COMMUNICATION IN WIRELESS COMMUNICATION SYSTEM AND DEVICE THEREFOR**

(30) Priority: 30.03.2023 KR 20230042224; 30.03.2023 KR 20230042311; 09.05.2023 KR 20230060166
(71) Applicant: LG Electronics Inc., Yeongdeungpo-gu Seoul 07336 (KR)
(72) Inventor: BACK, Seoyoung, Seoul 06772 (KR); LEE, Seungmin, Seoul 06772 (KR); LEE, Youngdae, Seoul 06772 (KR); PARK, Giwon, Seoul 06772 (KR)
(74) Representative: Frenkel, Matthias Alexander
(86) International application number: PCT/KR2024/004109
(87) International publication number: WO 2024/205337

(57) **Abstract**

According to various embodiments, disclosed are a method by which a relay user equipment (UE) establishes relay communication in a wireless communication system and a device therefor. Disclosed are a method and device, the method comprising the steps of: establishing a first connection with a first UE and a second connection with a second UE for an end to end (e2e) connection between the first UE and the second UE through the relay UE; splitting a quality of service (QoS) related to the e2e connection; and reporting split QoS information about the split QoS to a base station.

## Description

### TECHNICAL FIELD

The present disclosure relates to a method and apparatus for performing UE to UE (U2U) relay communication by a relay UE in a wireless communication system.

### BACKGROUND

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multi carrier frequency division multiple access (MC-FDMA) system.

A sidelink (SL) refers to a communication method in which a direct link is established between user equipment (UE), and voice or data is directly exchanged between terminals without going through a base station (BS). SL is being considered as one way to solve the burden of the base station due to the rapidly increasing data traffic.

V2X (vehicle-to-everything) refers to a communication technology that exchanges information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive Machine Type Communication (MTC), and Ultra-Reliable and Low Latency Communication (URLLC) may be referred to as new radio access technology (RAT) or new radio (NR). Even in NR, vehicle-to-everything (V2X) communication may be supported.

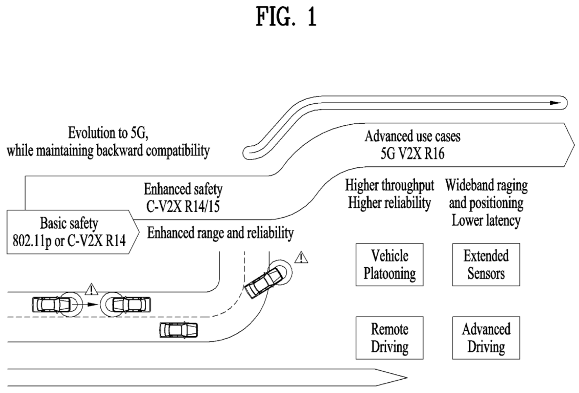

FIG. 1 is a diagram comparing RAT-based V2X communication before NR with NR-based V2X communication.

Regarding V2X communication, in RAT prior to NR, a scheme for providing a safety service based on V2X messages such as a basic safety message (BSM), a cooperative awareness message (CAM), and a decentralized environmental notification message (DENM) was mainly discussed. The V2X message may include location information, dynamic information, and attribute information. For example, the UE may transmit a periodic message type CAM and/or an event triggered message type DENM to another UE.

For example, the CAM may include dynamic state information about a vehicle such as direction and speed, vehicle static data such as dimensions, and basic vehicle information such as external lighting conditions and route details. For example, a UE may broadcast the CAM, and the CAM latency may be less than 100 ms. For example, when an unexpected situation such as a breakdown of the vehicle or an accident occurs, the UE may generate a DENM and transmit the same to another UE. For example, all vehicles within the transmission coverage of the UE may receive the CAM and/or DENM. In this case, the DENM may have a higher priority than the CAM.

Regarding V2X communication, various V2X scenarios have been subsequently introduced in NR. For example, the various V2X scenarios may include vehicle platooning, advanced driving, extended sensors, and remote driving.

For example, based on vehicle platooning, vehicles may dynamically form a group and move together. For example, to perform platoon operations based on vehicle platooning, vehicles belonging to the group may receive periodic data from a leading vehicle. For example, the vehicles belonging to the group may reduce or increase the distance between the vehicles based on the periodic data.

For example, based on advanced driving, a vehicle may be semi-automated or fully automated. For example, each vehicle may adjust trajectories or maneuvers based on data acquired from local sensors of nearby vehicles and/or nearby logical entities. Also, for example, each vehicle may share driving intention with nearby vehicles.

For example, on the basis of extended sensors, raw data or processed data acquired through local sensors, or live video data may be exchanged between a vehicle, a logical entity, UEs of pedestrians and/or a V2X application server. Thus, for example, the vehicle may recognize an environment that is improved over an environment that may be detected using its own sensor.

For example, for a person who cannot drive or a remote vehicle located in a dangerous environment, a remote driver or V2X application may operate or control the remote vehicle based on remote driving. For example, when a route is predictable as in the case of public transportation, cloud computing-based driving may be used to operate or control the remote vehicle. For example, access to a cloud-based back-end service platform may be considered for remote driving.

A method to specify service requirements for various V2X scenarios such as vehicle platooning, advanced driving, extended sensors, and remote driving is being discussed in the NR-based V2X communication field.

### DISCLOSURE

### TECHNICAL PROBLEM

The object of the present disclosure is to provide a method for performing relay communication more accurately and efficiently.

It will be appreciated by those of ordinary skill in the art to which the embodiment(s) pertain that the objects that could be achieved with the embodiment(s) are not limited to what has been particularly described hereinabove and the above and other objects will be more clearly understood from the following detailed description.

### TECHNICAL SOLUTION

According to an aspect, a method for performing relay communication by a relay user equipment (UE) in a wireless communication system may include establishing a first connection with a first UE and a second connection with a second UE, for an end-to-end (e2e) connection between the first UE and the second UE via the relay UE, splitting a quality of service (QoS) related to the e2e connection, and reporting split QoS information for the split QoS to a base station (BS).

Alternatively, the QoS related to the e2e connection may be split into a first split QoS for the first connection and a second split QoS for the second connection, and the relay UE may report only the second split QoS out of the first split QoS and the second split QoS as the split QoS information to the BS.

Alternatively, the method may further include receiving information about the QoS related to the e2e connection from the first UE.

Alternatively, the method may further include transmitting information about the first split QoS to the first UE via the first connection.

Alternatively, the method may further include transmitting information about the first split QoS and the information about the QoS related to the information about the first split QoS together to the first UE via the first connection.

Alternatively, the method may further include transmitting information about the second split QoS to the second UE via the second connection.

Alternatively, the split QoS information may include a split packet delay budget (PDB) value obtained by splitting a PDB value included in the QoS.

Alternatively, the relay UE may split the QoS based on a signal strength measured for the first connection and a signal strength measured for the second connection.

Alternatively, the method may further include receiving resource allocation information allocated for the second connection based on the split QoS information from the BS.

According to another aspect, a relay UE for performing the relay communication method may be provided.

According to another aspect, a processing device for controlling a relay UE that performs the relay communication method may be provided.

According to another aspect, a method for performing communication with a relay UE by a BS in a wireless communication system may include receiving a report of split QoS information obtained by splitting a QoS related to an end-to-end (e2e) connection between a first UE and a second UE via the relay UE from the relay UE which establishes a first connection with the first UE and a second connection with the second UE for the e2e connection, and transmitting resource allocation information allocated for the second connection based on the split QoS information to the relay UE.

According to another aspect, a BS for performing communication with a relay UE in a wireless communication system may include a radio frequency (RF) transceiver, and a processor connected to the RF transceiver. The processor may control the RF transceiver to receive a report of split QoS information obtained by splitting a QoS related to an end-to-end (e2e) connection between a first UE and a second UE via the relay UE from the relay UE which establishes a first connection with the first UE and a second connection with the second UE for the e2e connection, and transmit resource allocation information allocated for the second connection based on the split QoS information to the relay UE.

### ADVANTAGEOUS EFFECTS

According to embodiments of the present disclosure, relay communication may be performed more accurately and efficiently in a wireless communication system.

Effects to be achieved by embodiment(s) are not limited to what has been particularly described hereinabove and other effects not mentioned herein will be more clearly understood by persons skilled in the art to which embodiment(s) pertain from the following detailed description.

### BRIEF DESCRIPTION OF THE DRAWINGS

The accompanying drawings, which are included to provide a further understanding of the disclosure and are incorporated in and constitute a part of this application, illustrate embodiments of the disclosure and together with the description serve to explain the principle of the disclosure.
FIG. 1 is a diagram for explaining by comparing V2X communication based on RAT before NR and V2X communication based on NR.
FIG. 2 illustrates the structure of an LTE system to which embodiment(s) are applicable.
FIG. 3 illustrates the structure of an NR system to which embodiment(s) are applicable.
FIG. 4 illustrates the structure of an NR radio frame to which embodiment(s) are applicable.
FIG. 5 illustrates the slot structure of an NR frame to which embodiment(s) are applicable.
FIG. 6 illustrates a communication structure available in a sixth-generation (6G) system according to an embodiment of the present disclosure.
FIG. 7 illustrates an electromagnetic spectrum according to an embodiment of the present disclosure.
FIG. 8 illustrates a radio protocol architecture for SL communication.
FIG. 9 illustrates UEs performing V2X or SL communication.
FIG. 10 illustrates resource units for V2X or SL communication.
FIG. 11 shows an example of a BWP, based on an embodiment of the present disclosure.
FIG. 12 illustrates a procedure in which UEs perform V2X or SL communication according to a transmission mode.
FIG. 13 illustrates a procedure for path switching from a direct path to an indirect path.
FIG. 14 schematically illustrates a method of switching from a direct path to an indirect path.
FIGS. 15 and 16 are diagrams for explaining a procedure for UE-to-UE (U2U) relay selection without relay discovery.
FIG. 17 schematically illustrates plane protocol stacks for a L2 U2U relay.
FIG. 18 is a diagram for explaining a method of reestablishing an RRC connection.
FIGS. 19 to 21 are diagrams illustrating a method for transmitting a message via SRB1/2 in a U2U relay operation.
FIG. 22 is a diagram illustrating a method for allocating a local ID by a relay UE.
FIG. 23 is a diagram illustrating a method for performing U2U relay communication by a relay UE.
FIG. 24 is a diagram illustrating a method for allocating resources to a relay UE by a BS.
FIG. 25 illustrates a communication system applied to the present disclosure.
FIG. 26 illustrates wireless devices applicable to the present disclosure.
FIG. 27 illustrates another example of a wireless device to which the present disclosure is applied.
FIG. 28 illustrates a vehicle or an autonomous driving vehicle applied to the present disclosure.

### DETAILED DESCRIPTION

The wireless communication system is a multiple access system that supports communication with multiple users by sharing available system resources (e.g., bandwidth, transmission power, etc.). Examples of the multiple access system include a code division multiple access (CDMA) system, a frequency division multiple access (FDMA) system, a time division multiple access (TDMA) system, an orthogonal frequency division multiple access (OFDMA) system, a single carrier frequency (SC-FDMA) system, a multi carrier frequency division multiple access (MC-FDMA) system, and the like.

A sidelink refers to a communication scheme in which a direct link is established between user equipments (UEs) to directly exchange voice or data between UEs without assistance from a base station (BS). The sidelink is being considered as one way to address the burden on the BS caused by rapidly increasing data traffic.

Vehicle-to-everything (V2X) refers to a communication technology for exchanging information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive MTC, and Ultra-Reliable and Low Latency Communication (URLLC) may be referred to as new radio access technology (RAT) or new radio (NR). Even in NR, V2X communication may be supported.

Techniques described herein may be used in various wireless access systems such as code division multiple access (CDMA), frequency division multiple access (FDMA), time division multiple access (TDMA), orthogonal frequency division multiple access (OFDMA), single carrier-frequency division multiple access (SC-FDMA), etc. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA) etc. UTRA is a part of universal mobile telecommunications system (UMTS). 3GPP LTE is a part of Evolved UMTS (E-UMTS) using E-UTRA. 3GPP LTE employs OFDMA for downlink and SC-FDMA for uplink. LTE-A is an evolution of 3GPP LTE. 3GPP NR (New Radio or New Radio Access Technology) is an evolved version of 3GPP LTE/LTE-A/LTE-A pro.

5G NR is a successor technology of LTE-A, and is a new clean-slate mobile communication system with characteristics such as high performance, low latency, and high availability. 5G NR may utilize all available spectrum resources, from low frequency bands below 1 GHz to intermediate frequency bands from 1 GHz to 10 GHz and high frequency (millimeter wave) bands above 24 GHz.

For clarity of explanation, LTE-A or 5G NR is mainly described, but the technical spirit of the embodiment(s) is not limited thereto.

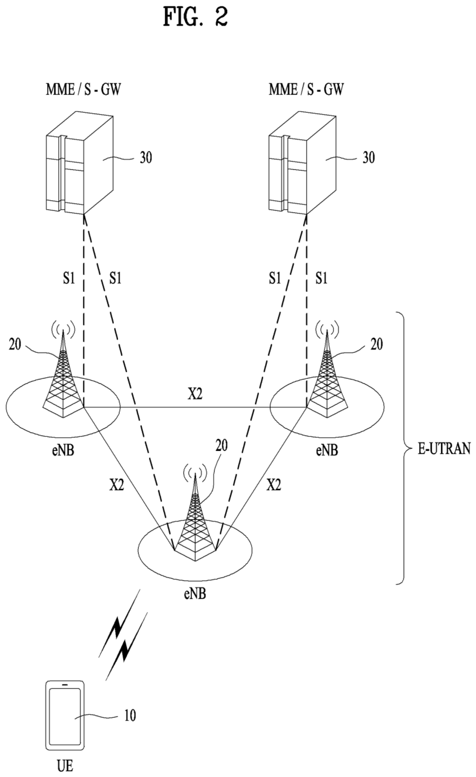

FIG. 2 illustrates the structure of an LTE system to which the present disclosure is applicable. This may also be called an evolved UMTS terrestrial radio access network (E-UTRAN) or LTE/LTE-A system.

Referring to FIG. 2, the E-UTRAN includes evolved Node Bs (eNBs) 20 which provide a control plane and a user plane to UEs 10. A UE 10 may be fixed or mobile, and may also be referred to as a mobile station (MS), user terminal (UT), subscriber station (SS), mobile terminal (MT), or wireless device. An eNB 20 is a fixed station communication with the UE 10 and may also be referred to as a base station (BS), a base transceiver system (BTS), or an access point.

eNBs 20 may be connected to each other via an X2 interface. An eNB 20 is connected to an evolved packet core (EPC) 39 via an S1 interface. More specifically, the eNB 20 is connected to a mobility management entity (MME) via an S1-MME interface and to a serving gateway (S-GW) via an S1-U interface.

The EPC 30 includes an MME, an S-GW, and a packet data network-gateway (P-GW). The MME has access information or capability information about UEs, which are mainly used for mobility management of the UEs. The S-GW is a gateway having the E-UTRAN as an end point, and the P-GW is a gateway having a packet data network (PDN) as an end point.

Based on the lowest three layers of the open system interconnection (OSI) reference model known in communication systems, the radio protocol stack between a UE and a network may be divided into Layer 1 (L1), Layer 2 (L2) and Layer 3 (L3). These layers are defined in pairs between a UE and an Evolved UTRAN (E-UTRAN), for data transmission via the Uu interface. The physical (PHY) layer at L1 provides an information transfer service on physical channels. The radio resource control (RRC) layer at L3 functions to control radio resources between the UE and the network. For this purpose, the RRC layer exchanges RRC messages between the UE and an eNB.

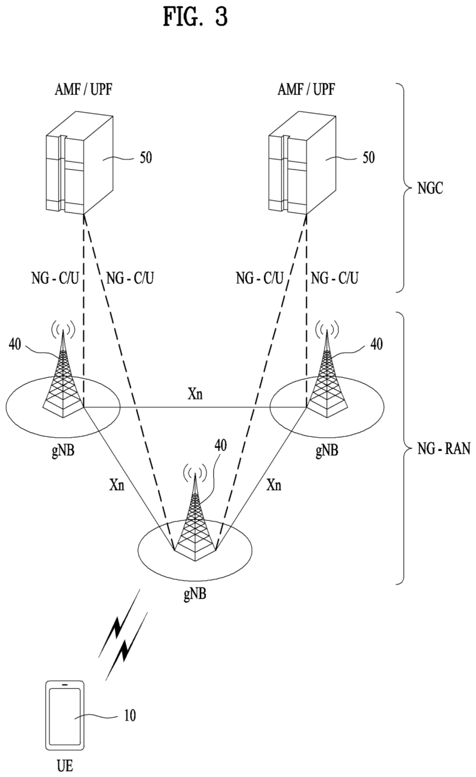

FIG. 3 illustrates the structure of a NR system to which the present disclosure is applicable.

Referring to FIG. 3, a next generation radio access network (NG-RAN) may include a next generation Node B (gNB) and/or an eNB, which provides user-plane and control-plane protocol termination to a UE. In FIG. 3, the NG-RAN is shown as including only gNBs, by way of example. A gNB and an eNB are connected to each other via an Xn interface. The gNB and the eNB are connected to a 5G core network (5GC) via an NG interface. More specifically, the gNB and the eNB are connected to an access and mobility management function (AMF) via an NG-C interface and to a user plane function (UPF) via an NG-U interface.

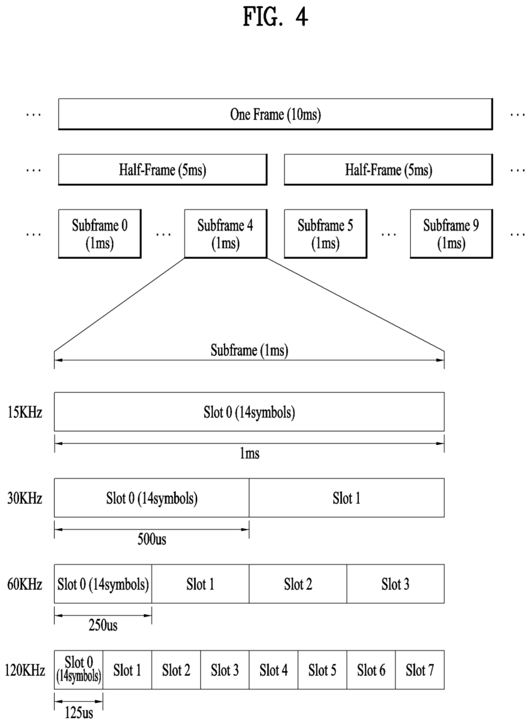

FIG. 4 illustrates the structure of a NR radio frame to which the present disclosure is applicable.

Referring to FIG. 4, a radio frame may be used for UL transmission and DL transmission in NR. A radio frame is 10 ms in length, and may be defined by two 5-ms half-frames. An HF may include five 1-ms subframes. A subframe may be divided into one or more slots, and the number of slots in an SF may be determined according to a subcarrier spacing (SCS). Each slot may include 12 or 14 OFDM(A) symbols according to a cyclic prefix (CP).

In a normal CP (NCP) case, each slot may include 14 symbols, whereas in an extended CP (ECP) case, each slot may include 12 symbols. Herein, a symbol may be an OFDM symbol (or CP-OFDM symbol) or an SC-FDMA symbol (or DFT-s-OFDM symbol).

Table 1 below lists the number of symbols per slot N^{slot}_{symb}, the number of slots per frame *N^{frame,u}ₛₗₒₜ,* and the number of slots per subframe *N^{subframe,u}ₛₗₒₜ* according to an SCS configuration µ in the NCP case.

**[Table 1]**

| SCS (15*2u) | N^{slot}_{symb} | N^{frame,u}ₛₗₒₜ | N^{subframe,u}ₛₗₒₜ |
|---|---|---|---|
| 15 kHz (u=0) | 14 | 10 | 1 |
| 30 kHz (u=1) | 14 | 20 | 2 |
| 60 kHz (u=2) | 14 | 40 | 4 |
| 120 kHz (u=3) | 14 | 80 | 8 |
| 240 kHz (u=4) | 14 | 160 | 16 |

Table 2 below lists the number of symbols per slot, the number of slots per frame, and the number of slots per subframe according to an SCS in the ECP case.

**[Table 2]**

| SCS (15*2^u) | N^{slot}_{symb} | N^{frame,u}ₛₗₒₜ | N^{subframe,u}ₛₗₒₜ |
|---|---|---|---|
| 60 kHz (u=2) | 12 | 40 | 4 |

In the NR system, different OFDM(A) numerologies (e.g., SCSs, CP lengths, etc.) may be configured for a plurality of cells aggregated for one UE. Thus, the (absolute) duration of a time resource (e.g., SF, slot, or TTI) including the same number of symbols may differ between the aggregated cells (such a time resource is commonly referred to as a time unit (TU) for convenience of description).

In NR, multiple numerologies or SCSs to support various 5G services may be supported. For example, a wide area in conventional cellular bands may be supported when the SCS is 15 kHz, and a dense urban environment, lower latency, and a wider carrier bandwidth may be supported when the SCS is 30 kHz/60 kHz. When the SCS is 60 kHz or higher, a bandwidth wider than 24.25 GHz may be supported to overcome phase noise.

The NR frequency band may be defined as two types of frequency ranges. The two types of frequency ranges may be FR1 and FR2. The numerical values of the frequency ranges may be changed. For example, the two types of frequency ranges may be configured as shown in Table 3 below. Among the frequency ranges used in the NR system, FR1 may represent "sub 6 GHz range" and FR2 may represent "above 6 GHz range" and may be called millimeter wave (mmW).

**[Table 3]**

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As mentioned above, the numerical values of the frequency ranges of the NR system may be changed. For example, FR1 may include a band of 410 MHz to 7125 MHz as shown in Table 4 below. That is, FR1 may include a frequency band of 6 GHz (or 5850 MHz, 5900 MHz, 5925 MHz, etc.) or higher. For example, the frequency band of 6 GHz (or 5850 MHz, 5900 MHz, 5925 MHz, etc.) or higher included in FR1 may include an unlicensed band. The unlicensed band may be used for various purposes, for example, for communication for vehicles (e.g., autonomous driving).

**[Table 4]**

| Frequency Range designation | Corresponding frequency range | Subcarrier Spacing (SCS) |
|---|---|---|
| FR1 | 410 MHz - 7125 MHz | 15, 30, 60 kHz |
| FR2 | 24250 MHz - 52600 MHz | 60, 120, 240 kHz |

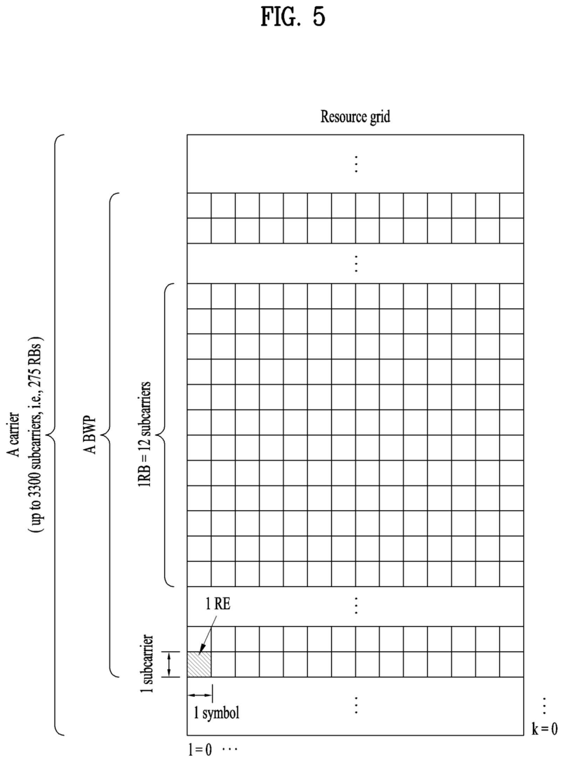

FIG. 5 illustrates the slot structure of a NR frame to which the present disclosure is applicable.

Referring to FIG. 5, one slot includes a plurality of symbols in the time domain. For example, one slot may include 14 symbols in a normal CP and 12 symbols in an extended CP. Alternatively, one slot may include 7 symbols in the normal CP and 6 symbols in the extended CP.

A carrier may include a plurality of subcarriers in the frequency domain. A resource block (RB) is defined as a plurality of consecutive subcarriers (e.g., 12 subcarriers) in the frequency domain. A bandwidth part (BWP) may be defined as a plurality of consecutive (P)RBs in the frequency domain, and the BWP may correspond to one numerology (e.g., SCS, CP length, etc.). The carrier may include up to N (e.g., 5) BWPs. Data communication may be conducted in an activated BWP. In a resource grid, each element may be referred to as a resource element (RE) and may be mapped to one complex symbol.

The wireless interface between UEs or the wireless interface between a UE and a network may be composed of an L1 layer, an L2 layer, and an L3 layer. In various embodiments of the present disclosure, the L1 layer may represent a physical layer. The L2 layer may represent, for example, at least one of a MAC layer, an RLC layer, a PDCP layer, and an SDAP layer. The L3 layer may represent, for example, an RRC layer.

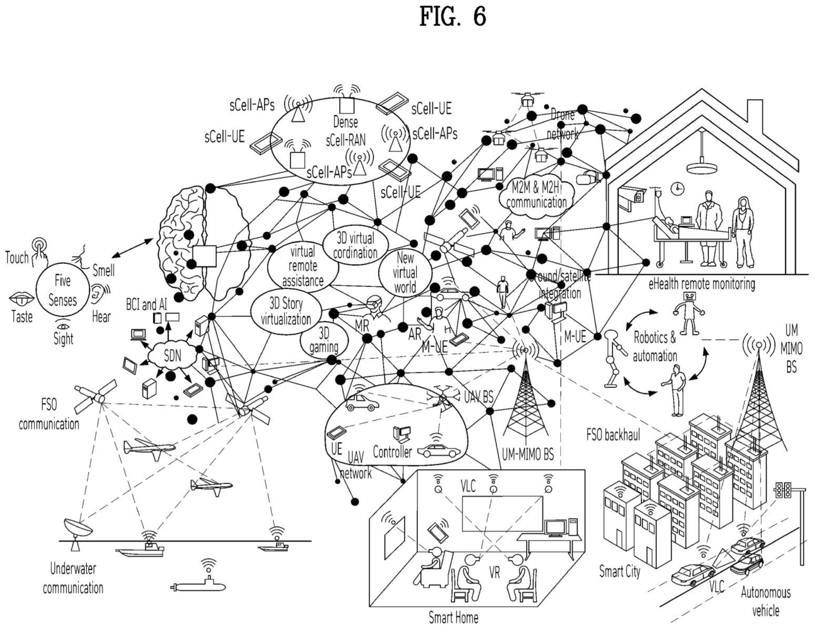

FIG. 6 illustrates a communication structure available in a sixth-generation (6G) system according to an embodiment of the present disclosure. The embodiment of FIG. 6 may be combined with various embodiments of the present disclosure.

In 6G, new network features may include the following.
- Integrated satellite network
- Connected intelligence: In contrast to previous generations of wireless communication systems, 6G may update the wireless advancement from "connected things" to "connected intelligence". Artificial intelligence (AI) may be applied in each step of communication procedures (i.e., each step of signal processing to be described later).
- Seamless integration of wireless information and energy transfer
- Ubiquitous super three-dimensional (3D) connectivity: Access to networks and core network functions pm drones and very low earth orbit satellites may enable super 3D connectivity in 6G universal.

Regarding the new network feature of 6G as described above, several common requirements may include the following:
Small cell networks
Ultra-dense heterogeneous networks
High-capacity backhaul
Radar technology integrated with mobile technology: High-accuracy localization via communication (or location-based service) is one of the functionalities of the 6G wireless communication system. Therefore, radar systems will be integrated with the 6G network.

### Softwarization and virtualization

Hereinafter, the key implementation technologies of the 6G system will be described.
- Artificial intelligence (AI): Introducing AI into communication may simplify and enhance real-time data transmission. AI may determine how complex tasks are performed using numerous analyses. In other words, AI may increase efficiency and reduce processing delays. Time-consuming tasks such as handover, network selection, and resource scheduling may be performed instantly with the use of AI. AI may also play a crucial role in machine-to-machine (M2M), machine-to-human, and human-to-machine communication. In addition, AI may enable rapid communication in a brain-computer interface (BCI). AI-based communication systems may be supported by metamaterials, intelligent architectures, intelligent networks, intelligent devices, intelligent recognition radios, self-sustaining wireless networks, and machine learning.
- Terahertz (THz) communication: Increasing the bandwidth may enhance data transmission rates, which may be achieved by using sub-THz communication with wide bandwidths and applying the advanced massive multiple input multiple output (MIMO) technology. THz waves, also known as submillimeter radiation, typically represent frequency bands between 0.1 THz and 10 THz, corresponding to wavelengths in the range of 0.03 mm to 3 mm. The band range from 100 GHz to 300 GHz (sub-THz band) is considered to be the main part of the THz band for cellular communications. Adding the sub-THz band to mmWave bands increases the capacity of 6G cellular communications. The band from 300 GHz to 3 THz of the defined THz band falls within the far infrared (IR) frequency band. The band from 300 GHz to 3 THz is part of the optical band, but the band lies at the boundary of the optical band and immediately after the RF band. Therefore, this 300 GHz to 3 THz band shows similarities to RF.

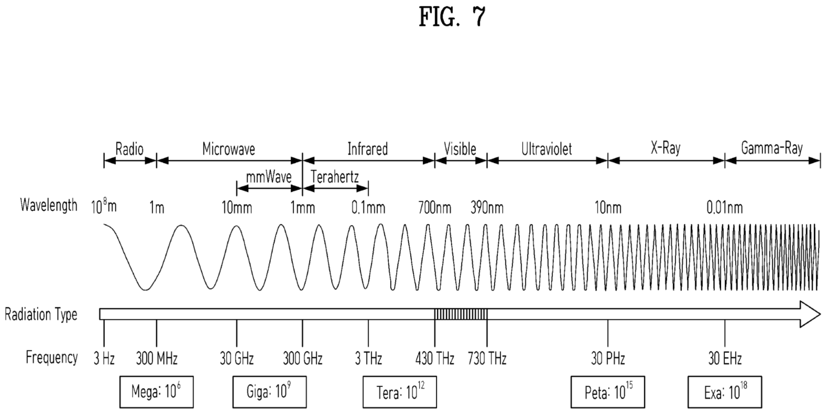

FIG. 7 illustrates an electromagnetic spectrum according to an embodiment of the present disclosure. The embodiment of FIG. 7 may be combined with various embodiments of the present disclosure. The key characteristics of THz communication include: (i) wide available bandwidths to support very high data transmission rates, and (ii) high path losses at high frequencies (highly directional antennas are indispensable). Narrow beamwidths generated by highly directional antennas reduce interference. The small wavelengths of THz signals allow a larger number of antenna elements to be incorporated into devices and BSs operating in this band. This enables the use of advanced adaptive array technologies capable of overcoming range limitations.
- Large-scale MIMO technology
- Hologram beamforming (HBF)
- Optical wireless technology
- Free-space optical (FSO) backhaul network
- Quantum communication
- Cell-free communication
- Integration of wireless information and power transmission
- Integration of wireless communication and sensing
- Integrated access and backhaul network
- Big data analysis
- Reconfigurable intelligent surface
- Metaverse
- Blockchain
- Unmanned aerial vehicle (UAV): UAVs or drones will be crucial elements in 6G wireless communication. In many cases, high-data-rate wireless connectivity may be provided using the UAV technology. BS entities may be installed on UAVs to provide cellular connectivity. The UAV may possess specific capabilities not found in fixed BS infrastructure, such as easy deployment, robust line-of-sight links, and degrees of freedom with controlled mobility. During emergencies such as natural disasters, the deployment of terrestrial communication infrastructure may not be economically feasible, and sometimes, it is impossible to provide services in volatile environments. The UAV may easily handle such situations. The UAV will represent a new paradigm in wireless communication. This technology facilitates the three fundamental requirements of wireless networks: enhanced mobile broadband (eMBB), ultra-reliable low latency communications (URLLC), and massive machine type communications (mMTC). In addition, the UAV may support various purposes such as improving network connectivity, fire detection, disaster emergency services, security and surveillance, pollution monitoring, parking monitoring, and accident monitoring. Therefore, the UAV technology is recognized as one of the most important technologies in 6G communication.
- Autonomous driving (self-driving): Vehicle-to-everything (V2X) communication, a key element in establishing autonomous driving infrastructure, refers to a technology that allows vehicles to communicate and share information with various elements on the road, such as vehicle-to-vehicle (V2V) and vehicle-to-infrastructure (V2I) wireless communications. To maximize the performance of autonomous driving and ensure high safety standards, fast transmission speeds and low-latency technologies are essential. In addition, autonomous driving in the future may involve actively intervening in vehicle operation and directly controlling vehicles in hazardous situations beyond just providing warnings or guidance messages to drivers. To accommodate the vast amount of information that needs to be transmitted and received, it is expected in 6G that autonomous driving capabilities will be maximized with faster transmission speeds and lower latency compared to 5G.

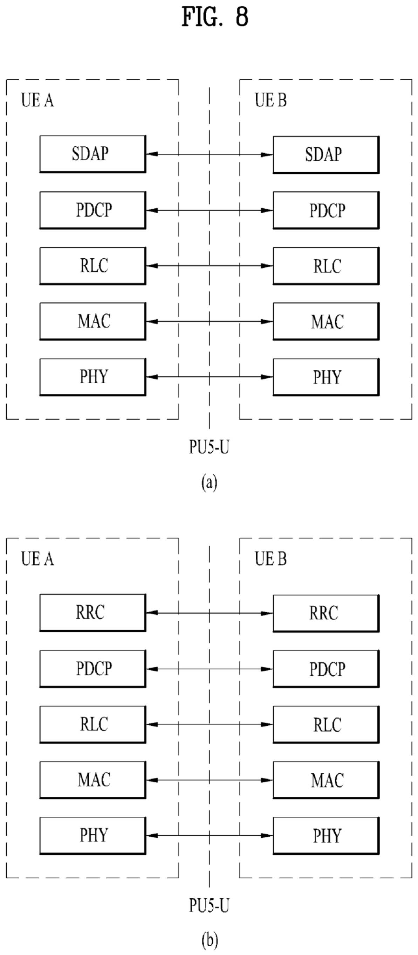

FIG. 8 illustrates a radio protocol architecture for SL communication. Specifically, FIG. 8-(a) shows a user plane protocol stack of NR, and FIG. 8-(b) shows a control plane protocol stack of NR.

Hereinafter, a sidelink synchronization signal (SLSS) and synchronization information will be described.

The SLSS is an SL-specific sequence, and may include a primary sidelink synchronization signal (PSSS) and a secondary sidelink synchronization signal (SSSS). The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, the UE may detect an initial signal and acquire synchronization using the S-PSS. For example, the UE may acquire detailed synchronization using the S-PSS and the S-SSS, and may detect a synchronization signal ID.

A physical sidelink broadcast channel (PSBCH) may be a (broadcast) channel on which basic (system) information that the UE needs to know first before transmission and reception of an SL signal is transmitted. For example, the basic information may include SLSS related information, a duplex mode (DM), time division duplex uplink/downlink (TDD UL/DL) configuration, resource pool related information, the type of an application related to the SLSS, a subframe offset, and broadcast information. For example, for evaluation of PSBCH performance, the payload size of PSBCH in NR V2X may be 56 bits including CRC of 24 bits.

The S-PSS, S-SSS, and PSBCH may be included in a block format (e.g., an SL synchronization signal (SS)/PSBCH block, hereinafter sidelink-synchronization signal block (S-SSB)) supporting periodic transmission. The S-SSB may have the same numerology (i.e., SCS and CP length) as a physical sidelink control channel (PSCCH)/physical sidelink shared channel (PSSCH) in the carrier, and the transmission bandwidth thereof may be within a (pre)set sidelink BWP (SL BWP). For example, the bandwidth of the S-SSB may be 11 resource blocks (RBs). For example, the PSBCH may span 11 RBs. The frequency position of the S-SSB may be (pre)set. Accordingly, the UE does not need to perform hypothesis detection at a frequency to discover the S-SSB in the carrier.

In the NR SL system, a plurality of numerologies having different SCSs and/or CP lengths may be supported. In this case, as the SCS increases, the length of the time resource in which the transmitting UE transmits the S-SSB may be shortened. Thereby, the coverage of the S-SSB may be narrowed. Accordingly, in order to guarantee the coverage of the S-SSB, the transmitting UE may transmit one or more S-SSBs to the receiving UE within one S-SSB transmission period according to the SCS. For example, the number of S-SSBs that the transmitting UE transmits to the receiving UE within one S-SSB transmission period may be pre-configured or configured for the transmitting UE. For example, the S-SSB transmission period may be 160 ms. For example, for all SCSs, the S-SSB transmission period of 160 ms may be supported.

For example, when the SCS is 15 kHz in FR1, the transmitting UE may transmit one or two S-SSBs to the receiving UE within one S-SSB transmission period. For example, when the SCS is 30 kHz in FR1, the transmitting UE may transmit one or two S-SSBs to the receiving UE within one S-SSB transmission period. For example, when the SCS is 60 kHz in FR1, the transmitting UE may transmit one, two, or four S-SSBs to the receiving UE within one S-SSB transmission period.

For example, when the SCS is 60 kHz in FR2, the transmitting UE may transmit 1, 2, 4, 8, 16 or 32 S-SSBs to the receiving UE within one S-SSB transmission period. For example, when SCS is 120 kHz in FR2, the transmitting UE may transmit 1, 2, 4, 8, 16, 32 or 64 S-SSBs to the receiving UE within one S-SSB transmission period.

When the SCS is 60 kHz, two types of CPs may be supported. In addition, the structure of the S-SSB transmitted from the transmitting UE to the receiving UE may depend on the CP type. For example, the CP type may be normal CP (NCP) or extended CP (ECP). Specifically, for example, when the CP type is NCP, the number of symbols to which the PSBCH is mapped in the S-SSB transmitted by the transmitting UE may be 9 or 8. On the other hand, for example, when the CP type is ECP, the number of symbols to which the PSBCH is mapped in the S-SSB transmitted by the transmitting UE may be 7 or 6. For example, the PSBCH may be mapped to the first symbol in the S-SSB transmitted by the transmitting UE. For example, upon receiving the S-SSB, the receiving UE may perform an automatic gain control (AGC) operation in the period of the first symbol for the S-SSB.

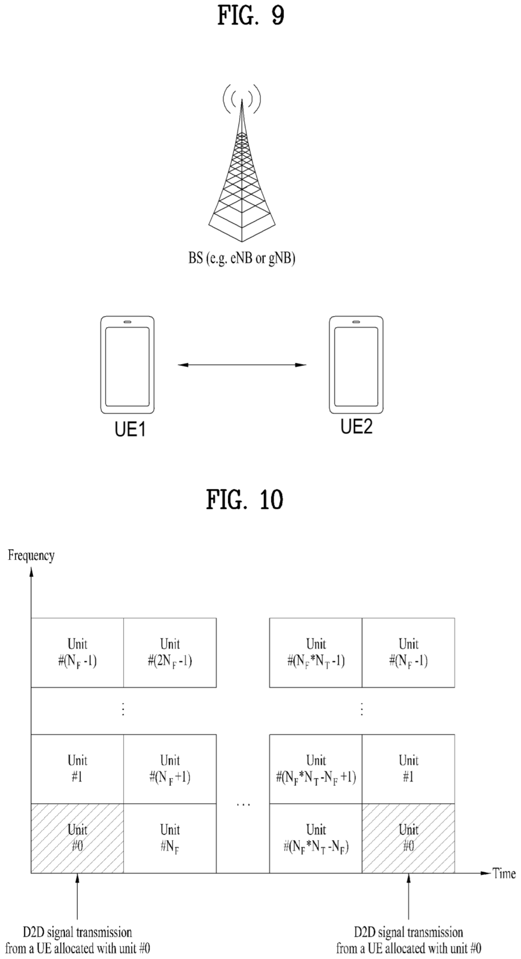

FIG. 9 illustrates UEs performing V2X or SL communication.

Referring to FIG. 9, in V2X or SL communication, the term UE may mainly refer to a user's UE. However, when network equipment such as a BS transmits and receives signals according to a communication scheme between UEs, the BS may also be regarded as a kind of UE. For example, UE 1 may be the first device 100, and UE 2 may be the second device 200.

For example, UE 1 may select a resource unit corresponding to a specific resource in a resource pool, which represents a set of resources. Then, UE 1 may transmit an SL signal through the resource unit. For example, UE 2, which is a receiving UE, may receive a configuration of a resource pool in which UE 1 may transmit a signal, and may detect a signal of UE 1 in the resource pool.

Here, when UE 1 is within the connection range of the BS, the BS may inform UE 1 of a resource pool. On the other hand, when the UE 1 is outside the connection range of the BS, another UE may inform UE 1 of the resource pool, or UE 1 may use a preconfigured resource pool.

In general, the resource pool may be composed of a plurality of resource units, and each UE may select one or multiple resource units and transmit an SL signal through the selected units.

FIG. 10 illustrates resource units for V2X or SL communication.

Referring to FIG. 10, the frequency resources of a resource pool may be divided into NF sets, and the time resources of the resource pool may be divided into NT sets. Accordingly, a total of NF * NT resource units may be defined in the resource pool. FIG. 10 shows an exemplary case where the resource pool is repeated with a periodicity of NT subframes.

As shown in FIG. 10, one resource unit (e.g., Unit #0) may appear periodically and repeatedly. Alternatively, in order to obtain a diversity effect in the time or frequency dimension, an index of a physical resource unit to which one logical resource unit is mapped may change in a predetermined pattern over time. In this structure of resource units, the resource pool may represent a set of resource units available to a UE which intends to transmit an SL signal.

Resource pools may be subdivided into several types. For example, according to the content in the SL signal transmitted in each resource pool, the resource pools may be divided as follows.

(1) Scheduling assignment (SA) may be a signal including information such as a position of a resource through which a transmitting UE transmits an SL data channel, a modulation and coding scheme (MCS) or multiple input multiple output (MIMO) transmission scheme required for demodulation of other data channels, and timing advance (TA). The SA may be multiplexed with SL data and transmitted through the same resource unit. In this case, an SA resource pool may represent a resource pool in which SA is multiplexed with SL data and transmitted. The SA may be referred to as an SL control channel.

(2) SL data channel (physical sidelink shared channel (PSSCH)) may be a resource pool through which the transmitting UE transmits user data. When the SA and SL data are multiplexed and transmitted together in the same resource unit, only the SL data channel except for the SA information may be transmitted in the resource pool for the SL data channel. In other words, resource elements (REs) used to transmit the SA information in individual resource units in the SA resource pool may still be used to transmit the SL data in the resource pool of the SL data channel. For example, the transmitting UE may map the PSSCH to consecutive PRBs and transmit the same.

(3) The discovery channel may be a resource pool used for the transmitting UE to transmit information such as the ID thereof. Through this channel, the transmitting UE may allow a neighboring UE to discover the transmitting UE.

Even when the SL signals described above have the same content, they may use different resource pools according to the transmission/reception properties of the SL signals. For example, even when the SL data channel or discovery message is the same among the signals, it may be classified into different resource pools according to determination of the SL signal transmission timing (e.g., transmission at the reception time of the synchronization reference signal or transmission by applying a predetermined TA at the reception time), a resource allocation scheme (e.g., the BS designates individual signal transmission resources to individual transmitting UEs or individual transmission UEs select individual signal transmission resources within the resource pool), signal format (e.g., the number of symbols occupied by each SL signal in a subframe, or the number of sub frames used for transmission of one SL signal), signal strength from a BS, the strength of transmit power of an SL UE, and the like.

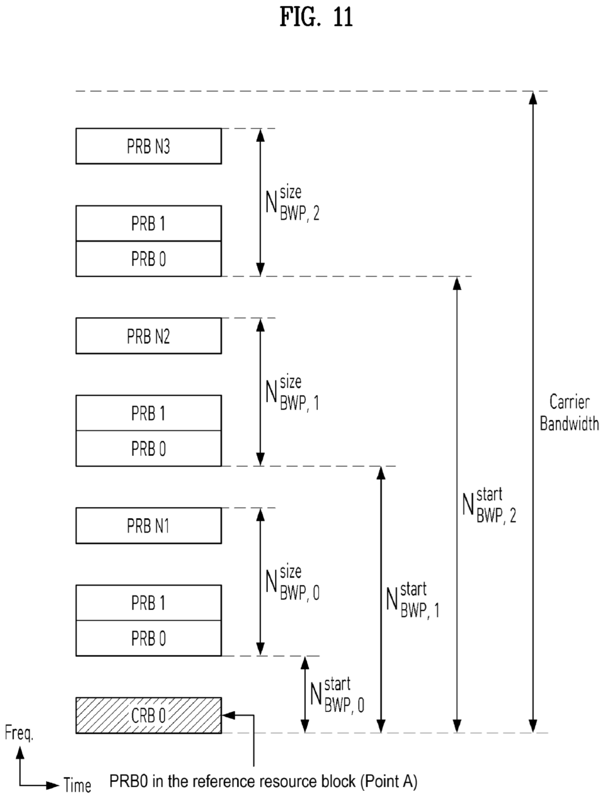

FIG. 11 shows an example of a BWP, based on an embodiment of the present disclosure. The embodiment of FIG. 11 may be combined with various embodiments of the present disclosure. It is assumed in the embodiment of FIG. 11 that the number of BWPs is 3.

Referring to FIG. 11, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset NstartBWP from the point A, and a bandwidth NsizeBWP. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

Hereinafter, V2X or SL communication will be described. The SLSS is an SL-specific sequence, and may include a primary sidelink synchronization signal (PSSS) and a secondary sidelink synchronization signal (SSSS). The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, the UE may detect an initial signal and acquire synchronization using the S-PSS. For example, the UE may acquire detailed synchronization using the S-PSS and the S-SSS, and may detect a synchronization signal ID.

A physical sidelink broadcast channel (PSBCH) may be a (broadcast) channel on which basic (system) information that the UE needs to know first before transmission and reception of an SL signal is transmitted. For example, the basic information may include SLSS related information, a duplex mode (DM), time division duplex uplink/downlink (TDD UL/DL) configuration, resource pool related information, the type of an application related to the SLSS, a subframe offset, and broadcast information. For example, for evaluation of PSBCH performance, the payload size of PSBCH in NR V2X may be 56 bits including CRC of 24 bits.

The S-PSS, S-SSS, and PSBCH may be included in a block format (e.g., an SL synchronization signal (SS)/PSBCH block, hereinafter sidelink-synchronization signal block (S-SSB)) supporting periodic transmission. The S-SSB may have the same numerology (i.e., SCS and CP length) as a physical sidelink control channel (PSCCH)/physical sidelink shared channel (PSSCH) in the carrier, and the transmission bandwidth thereof may be within a (pre)set sidelink BWP (SL BWP). For example, the bandwidth of the S-SSB may be 11 resource blocks (RBs). For example, the PSBCH may span 11 RBs. The frequency position of the S-SSB may be (pre)set. Accordingly, the UE does not need to perform hypothesis detection at a frequency to discover the S-SSB in the carrier.

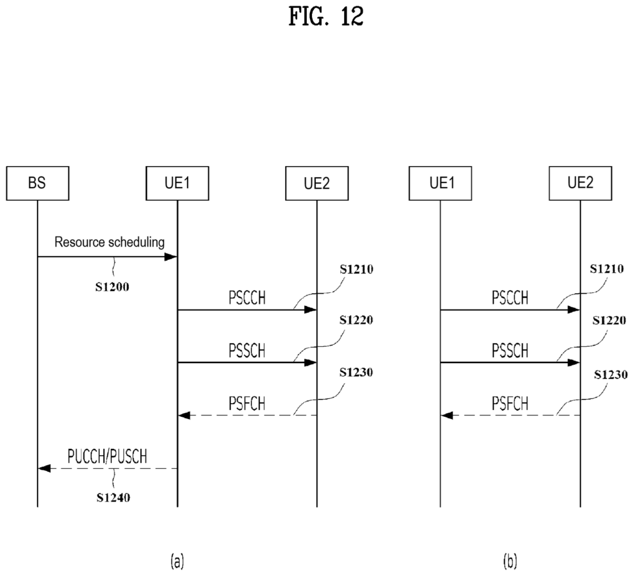

FIG. 12 illustrates a procedure for a terminal to perform V2X or SL communications in accordance with a resource allocation mode, according to one embodiment of the present disclosure. The embodiment of FIG. 12 may be combined with various embodiments of the present disclosure.

Referring to FIG. 12-(a), in LTE transmission mode 1, LTE transmission mode 3 or NR resource allocation mode 1, the BS may schedule an SL resource to be used by the UE for SL transmission. For example, in step S1500, the base station may transmit to the first terminal information associated with the SL resource and/or information associated with the UL resource. For example, the UL resource may include a PUCH resource and/or a PUSCH resource. For example, the UL resource may be a resource for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S1510, the first UE may transmit a PSCCH (e.g., sidelink control information (SCI) or 1st-stage SCI) to a second UE based on the resource scheduling. In step S620, the first UE may transmit a PSSCH (e.g., 2nd-stage SCI, MAC PDU, data, etc.) related to the PSCCH to the second UE. In step S630, the first UE may receive a PSFCH related to the PSCCH/PSSCH from the second UE. For example, HARQ feedback information (e.g., NACK information or ACK information) may be received from the second UE through the PSFCH. In step S640, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling.

Referring to (b) of FIG. 12, in the LTE transmission mode 2, the LTE transmission mode 4, or the NR resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S610, a first UE which has selected resource(s) from a resource pool by itself may transmit a PSCCH (e.g., sidelink control information (SCI) or 1st-stage SCI) to a second UE by using the resource(s). In step S1520, the first UE may transmit a PSSCH (e.g., 2nd-stage SCI, MAC PDU, data, etc.) related to the PSCCH to the second UE. In step S1530, the first UE may receive a PSFCH related to the PSCCH/PSSCH from the second UE.

Referring to (a) or (b) of FIG. 12, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1st SCI, a first SCI, a 1st-stage SCI or a 1st-stage SCI format, and a SCI transmitted through a PSSCH may be referred to as a 2nd SCI, a second SCI, a 2nd-stage SCI or a 2nd-stage SCI format.

Referring to (a) or (b) of FIG. 12, at step S1530, the first terminal may receive the PSFCH. For example, the first terminal and the second terminal may determine a PSFCH resource, and the second terminal may use the PSFCH resource to transmit HARQ feedback to the first terminal.

Referring to (a) of FIG. 12, at step S1540, the first terminal may transmit the SL HARQ feedback to the base station via PUCCH and/or PUSCH.

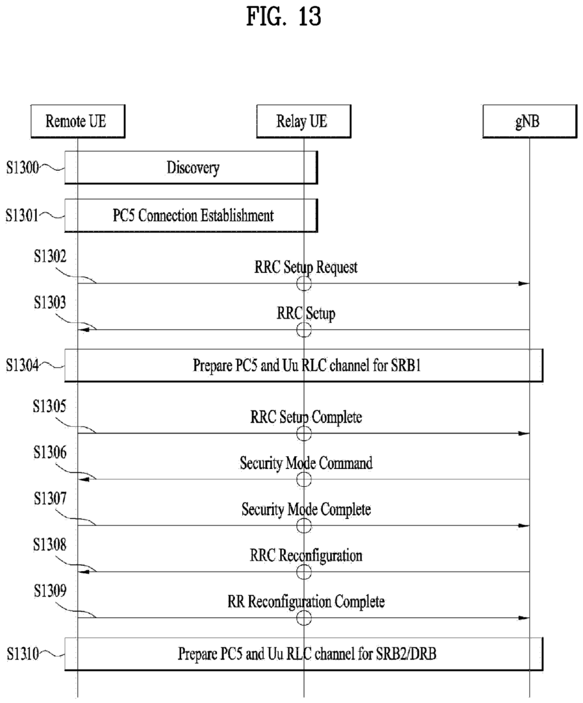

FIG. 13 illustrates a procedure for path switching from a direct path to an indirect path.

The procedure shown in FIG. 13 is based on the connection management and the path switching procedure from a direct path to an indirect path described in the TR document (3GPP TR 38.836) related to Rel-17 NR SL. A remote UE needs to establish a protocol data unit (PDU) session/data radio bearer (DRB) thereof with a network before user plane data transmission.

Regarding PC5-RRC in Rel-16 NR V2X, a PC5 unicast link establishment procedure may be reused to setup a secure unicast link between the remote UE and a relay UE for Layer 2 UE-to-network (L2 U2N) relaying before the remote UE establishes a Uu RRC connection with the network through the relay UE.

When the remote UE initiates a first RRC message to establish a connection with the gNB for both in-coverage and out-of-coverage cases, the PC5 L2 configuration for transmission between the remote UE and the U2N relay UE may be based on the radio link control (RLC) and/or medium access control (MAC) configuration defined in the standard. To establish Uu signaling radio bearer 1/signaling radio bearer 2 (SRB1/SRB2) and DRBs, the remote UE follows the legacy Uu configuration procedure for L2 U2N relaying. The high-level connection establishment procedure shown in FIG. 13 is applied to L2 U2N relaying.

In step S1300, the remote UE and relay UE may perform a discovery procedure. In step S1301, the remote UE and relay UE may establish a PC5-RRC connection based on legacy Rel-16 procedures.

In step S1302, the remote UE may transmit the first RRC message (i.e., RRCSetupRequest) to establish the connection with the gNB through the relay UE using the default PC5 L2 configuration. The gNB responds to the remote UE with an RRCSetup message (S1303). The default PC5 configuration is used to transmit the RRCSetup message to the remote UE. If the relay UE has not started in the RRC_CONNECTED state, the relay UE needs to establish the connection upon receiving a message about the default PC5 L2 configuration. Details for the relay UE to transmit the RRCSetupRequest/RRCSetup message to the remote UE may be discussed in the work item (WI) phase.

In step S1304, the gNB and relay UE perform a relay channel setup procedure over Uu. Depending on the configuration of the gNB, the relay/remote UE establishes an RLC channel for relaying SRB1 to the remote UE over PC5. This step prepares the relay channel for SRB1.

In step S1305, the SRB1 message (e.g., RRCSetupComplete message) from the remote UE is transmitted to the gNB through the relay UE on the SRB1 relaying channel over PC5. The remote UE establishes the RRC connection over Uu.

In step S1306, the remote UE and gNB establish security according to legacy procedures, and a security message is transmitted through the relay UE.

In steps S1308 and S1309, the gNB transmits an RRCReconfiguration message to the remote UE through the relay UE to establish the SRB2/DRB for relaying. The remote UE responds to the gNB with an RRCReconfigurationComplete message through the relay UE.

In step S1310, the gNB establishes an additional RLC channel between the gNB and relay UE for traffic relay. Depending on the configuration of the gNB, the relay/remote UE establishes additional RLC channels between the remote UE and relay UE for traffic relay. The gNB transmits the RRCReconfiguration message to the remote UE through the relay UE to establish the SRB2/DRB for relaying. The remote UE responds to the gNB with the RRCReconfigurationComplete message through the relay UE.

For L2 U2N relaying in addition to the connection establishment procedure:
- The RRC reestablishment and RRC connection release procedures may reuse legacy RRC procedures along with the message content/configuration design left in the WI phase.
- The RRC connection reestablishment and RRC connection resume procedures may reuse legacy RRC procedures as a baseline by considering the connection establishment procedure of the L2 U2N relay above to handle relay-specific parts along with message content/configuration design. The message content/configuration may be defined at a later stage.

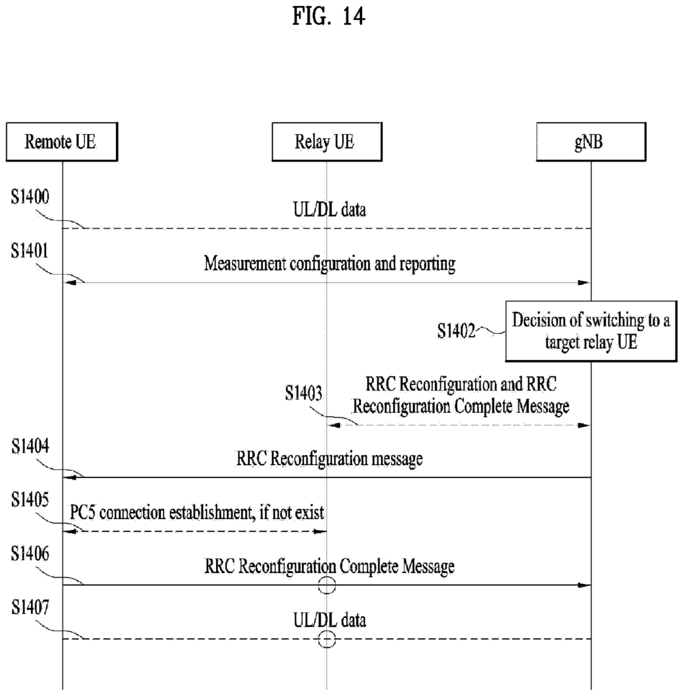

FIG. 14 schematically illustrates a method of switching from a direct path to an indirect path.

A direct remote UE may transition to an indirect relay UE for service continuity of the L2 U2N relay based on the procedure shown in FIG. 14.

Referring to FIG. 14, in step S1401, the remote UE may report one or several candidate relay UEs after measuring/discovering the candidate relay UEs. When reporting the candidate relay UEs, the remote UE may filter appropriate relay UEs that meet higher layer criteria. The report of the at least one candidate relay may include the ID of the relay UE and SL RSRP information. Details related to PC5 measurement may be determined later.

In step S1402, the gNB determines to switch to a target relay UE and optionally transmits a target (re)configuration to the relay UE (S1403).

In step S1404, an RRCReconfiguration message for the remote UE may include the ID of the target relay UE and target Uu and PC5 configurations.

In step S1405, the remote UE establishes a PC5 connection with the target relay UE if there is no connection established.

In step S1406, the remote UE feeds back an RRCReconfigurationComplete message to the gNB via a target path based on the target configuration provided in the RRCReconfiguration message.

In step S1407, the data path is switched.

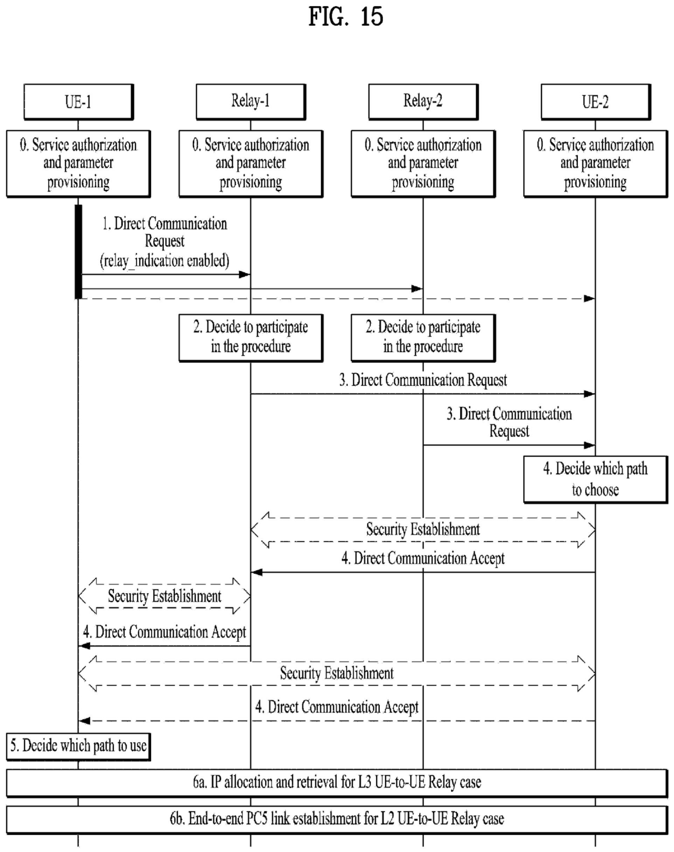

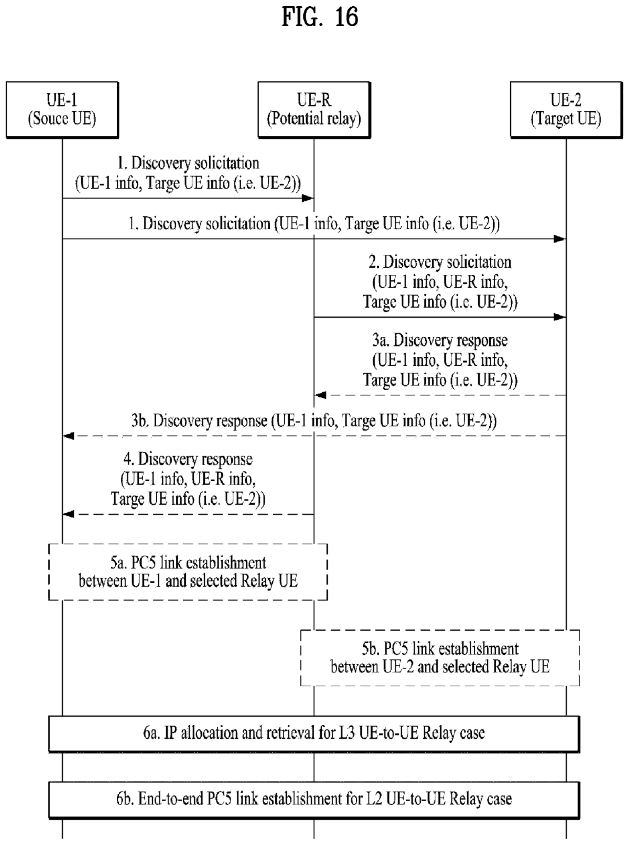

FIGS. 15 and 16 are diagrams for explaining a procedure for UE-to-UE (U2U) relay selection without relay discovery.

Referring to the specified scenario (in Clause 6.8 of TR 23.752), when a source UE desires to communicate with a target UE, the source UE may first attempt to find the target UE by transmitting a Direct Communication Request or Solicitation message including information about the target UE. If the source UE is incapable of directly reaching the target UE, the source UE may attempt to discover a U2U relay to reach the target UE which may also trigger the relay to discover the target UE. The source UE may integrate the discovery of the target UE and/or the discovery/selection of the U2U relay based on the following two alternatives.

- Alternative 1: The discovery/selection of the U2U relay may be integrated into a unicast link establishment procedure (refer to Clause 6.3.3 of TS 23.287).

- Alternative 2: The discovery/selection of the U2U relay may be integrated into a Model B direct discovery procedure.

To indicate whether a relay is capable of being used for communication, a new field may be added to the Direct Communication Request or Solicitation message. This new field may be defined as Relay _indication. If the (source) UE intends to broadcast the Direct Communication Request or Solicitation message, the request message may include Relay _indication to indicate whether the U2U relay may be used. For Release 17, it may be assumed that the value of Relay _indication is limited to a single hop.

If the U2U relay receives the request message with Relay _indication configured, the U2U relay may determine whether to forward the request message (i.e., modify the message and broadcast the message in the vicinity thereof). For instance, based on the following factors: Relay Service Code if present, Application ID, authorization policy (e.g., relay for specific ProSe services), current traffic load of the relay, and wireless conditions between the source UE and relay UE, the U2U relay may determine whether to forward the request message.

Alternatively, multiple U2U relays may be used to reach the target UE (scenario 1), or the target UE may directly receive the request message from the source UE (scenario 2). In this case, the target UE may select whether to respond in scenario 1 or scenario 2. For example, the target UE may select whether to respond in scenario 1 or scenario 2 based on the following factors: signal strength, local policy (e.g., traffic load of U2U relays), relay service code (if present), and/or operator policies (e.g., preference for always using direct communication or selectively using specific U2U relays).

Alternatively, the source UE may receive responses to the request message from multiple U2U relays or may directly receive a response to the request message from the target UE. In this case, the source UE may select the communication path (direct path or indirect path) based on the signal strength or operator policies (e.g., preference for always using direct communication or selectively using specific U2U relays).

Specifically, the alternative described above may be implemented as described in Table 5 and FIG. 15.

**[Table 5]**

| |
|---|
| 6.8.2 Procedures |
| 6.8.2.1 UE-to-UE relay discovery and selection is integrated into the unicast link establishment procedure (Alternative 1) Fig 14 illustrates the procedure of the proposed method. |
| 0. UEs are authorized to use the service provided by the UE-to-UE relays. UE-to-UE relays are authorized to provide service of relaying traffic among UEs. The authorization and the parameter provisioning can use solutions for KI#8, e.g. Sol#36. The authorization can be done when UEs/relays are registered to the network. Security related parameters may be provisioned so that a UE and a relay can verify the authorization with each other if needed. |
| 1. UE-1 wants to establish unicast communication with UE-2 and the communication can be either through direct link with UE-2 or via a UE-to-UE relay. Then UE-1 broadcasts Direct Communication Request with relay _indication enabled. The message will be received by relay-1, relay-2. The message may also be received by UE-2 if it is in the proximity of UE-1. UE-1 includes source UE info, target UE info, Application ID, as well as Relay Service Code if there is any. If UE-1 does not want relay to be involved in the communication, then it will made relay _indication disabled. |
| NOTE 1: The data type of relay _indication can be determined in Stage 3. Details of Direct Communication Request/Accept messages will be determined in stage 3. |
| 2. Relay-1 and relay-2 decide to participate in the procedure. They broadcast a new Direct Communication Request message in their proximity without relay_indication enabled. If a relay receives this message, it will just drop it. When a relay broadcasts the Direct Communication Request message, it includes source UE info, target UE info and Relay UE info (e.g. Relay UE ID) in the message and use Relay's L2 address as the source Layer-2 ID. The Relay maintains association between the source UE information (e.g. source UE L2 ID) and the new Direct Communication Request. |
| 3. UE-2 receives the Direct Communication Requests from relay-1 and relay-2. UE-2 may also receive Direct Communication Request message directly from the UE-1 if the UE-2 is in the communication range of UE-1. |
| 4. UE-2 chooses relay-1 and replies with Direct Communication Accept message. If UE-2 directly receives the Direct Communication Request from UE-1, it may choose to setup a direct communication link by sending the Direct Communication Accept message directly to UE-1. After receiving Direct Communication Accept, a UE-to-UE relay retrieves the source UE information stored in step 2 and sends the Direct Communication Accept message to the source UE with its Relay UE info added in the message. |
| After step 4, UE-1 and UE-2 have respectively setup the PC5 links with the chosen UE-to-UE relay. |
| NOTE 2: The security establishment between the UE1 and Relay-1, and between Relay-1 and UE-2 are performed before the Relay-1 and UE-2 send Direct Communication Accept message. Details of the authentication/ security establishment procedure are determined by SA WG3. The security establishment procedure can be skipped if there already exists a PC5 link between the source (or target) UE and the relay which can be used for relaying the traffic. |
| 5. UE-1 receives the Direct Communication Accept message from relay-1. UE-1 chooses path according to e.g. policies (e.g. always choose direct path if it is possible), signal strength, etc. If UE-1 receives Direct Communication Accept / Response message request accept directly from UE-2, it may choose to setup a direct PC5 L2 link with UE-2 as described in clause 6.3.3 of TS 23.287 [5], then step 6 is skipped. |
| 6a. For the L3 UE-to-UE Relay case, UE-1 and UE-2 finish setting up the communication link via the chosen UE-to-UE relay. The link setup information may vary depending on the type of relay, e.g. L2 or L3 relaying. Then UE-1 and UE-2 can communicate via the relay. Regarding IP address allocation for the source/remote UE, the addresses can be either assigned by the relay or by the UE itself (e.g. link-local IP address) as defined in clause 6.3.3 of TS 23.287 [5]. |
| 6b. For the Layer 2 UE-to-UE Relay case, the source and target UE can setup an end-to-end PC5 link via the relay. UE-1 sends a unicast E2E Direct Communication Request message to UE-2 via the Relay-1, and UE-2 responds with a unicast E2E Direct Communication Accept message to UE-1 via the Relay-1. Relay-1 transfers the messages based on the identity information of UE-1/UE-2 in the Adaptation Layer. |
| NOTE 3: How Relay-1 can transfer the messages based on the identity information of UE-1/UE-2 in the Adaptation Layer requires cooperation with RAN2 during the normative phase. |
| NOTE 4: In order to make a relay or path selection, the source UE can setup a timer after sending out the Direct Communication Request for collecting the corresponding response messages before making a decision. Similarly, the target UE |
| can also setup a timer after receiving the first copy of the Direct Communication Request / message for collecting multiple copies of the message from different paths before making a decision. |
| NOTE 5: In the first time when a UE receives a message from a UE-to-UE relay, the UE needs to verify if the relay is authorized be a UE-to-UE relay. Similarly, the UE-to-UE relay may also need to verify if the UE is authorized to use the relay service. The verification details and the how to secure the communication between two UEs through a UE-to-UE relay is to be defined by SA WG3. |

Alternative 2 described above may be implemented as described in Table 6 and FIG. 16.

**[Table 6]**

| |
|---|
| 6.8.2.2 UE-to-UE relay discovery and selection is integrated into Model B direct discovery procedure (Alternative 2) Depicted in Fig 15 is the procedure for UE-UE Relay discovery Model B, and the discovery/selection procedure is separated from hop by hop and end-to-end link establishment. |
| 1. UE-1 broadcasts discovery solicitation message carrying UE-1 info, target UE info (UE-2), Application ID, Relay Service Code if any, the UE-1 can also indicate relay _indication enabled. |
| 2. On reception of discovery solicitation, the candidate Relay UE-R broadcasts discovery solicitation carrying UE-1 info, UE-R info, Target UE info. The Relay UE-R uses Relay's L2 address as the source Layer-2 ID. |
| 3. The target UE-2 responds the discovery message. If the UE-2 receives discovery solicitation message in step 1, then UE-2 responds discovery response in step 3b with UE-1 info, UE-2 info. If not and UE-2 receives discovery solicitation in step 2, then UE-2 responds discovery response message in step 3a with UE-1 info, UE-R info, UE-2 info. |
| 4. On reception of discovery response in step 3a, UE-R sends discovery response with UE-1 info, UE-R info, UE-2 info. If more than one candidate Relay UEs responding discovery response message, UE-1 can select one Relay UE based on e.g. implementation or link qualification. |
| 5. The source and target UE may need to setup PC5 links with the relay before communicating with each other. Step 5a can be skipped if there already exists a PC5 link between the UE-1 and UE-R which can be used for relaying. Step 5b can be skipped if there already exists a PC5 link between the UE-2 and UE-R which can be used for relaying. |
| 6a. Same as step 6a described in clause 6.8.2.1. |
| 6b. For the Layer-2 UE-to-UE Relay, the E2E unicast Direct Communication Request message is sent from UE1 to the selected Relay via the per-hop link (established in steps 5a) and the Adaptation layer info identifying the peer UE (UE3) as the destination. The UE-to-UE Relay transfers the E2E messages based on the identity information of peer UE in the Adaptation Layer. The initiator (UE1) knows the Adaptation layer info identifying the peer UE (UE3) after a discovery procedure. UE3 responds with E2E unicast Direct Communication Accept message in the same way. |
| NOTE 1: For the Layer 2 UE-to-UE Relay case, whether step5b is performed before step 6b or triggered during step 6b will be decided at normative phase. |
| NOTE 2: How Relay-1 can transfer the messages based on the identity information of UE-1/UE-2 in the Adaptation Layer requires cooperation with RAN2 during the normative phase. |
| 6.8.3 Impacts on services, entities and interfaces |
| UE impacts to support new Relay related functions. |

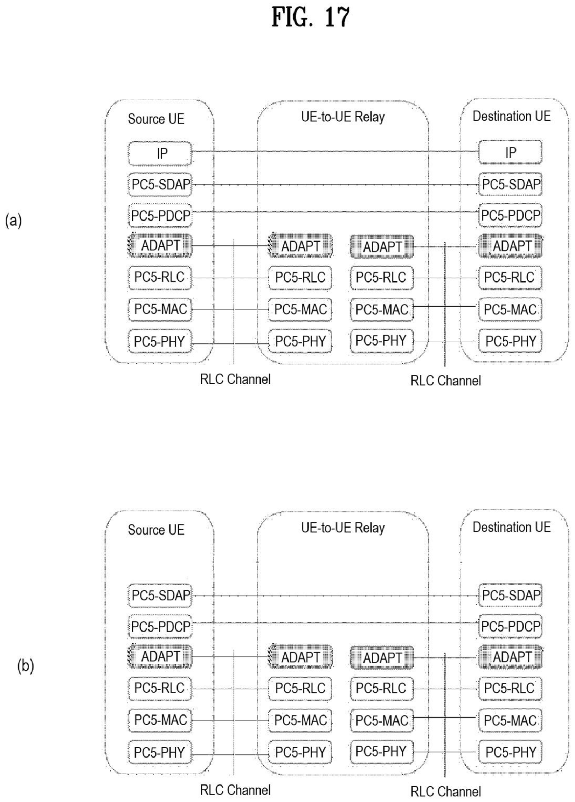

FIG. 17(a) schematically illustrates a protocol stack for an L2 U2U relay.

FIG. 17(a) illustrates a user plane protocol stack for the L2 U2U relay, while FIG. 17(b) illustrates a control plane protocol stack for the L2 U2U relay. Table 7 shows details of the architectures and protocol stacks of the L2 relay shown in FIG. 17.

**[Table 7]**

| |
|---|
| 5.5 Layer-2 Relay |
| 5.5.1 Architecture and Protocol Stack |
| For L2 UE-to-UE Relay architecture, the protocol stacks are similar to L2 UE-to-Network Relay other than the fact that the termination points are two Remote UEs. The protocol stacks for the user plane and control plane of L2 UE-to-UE Relay architecture are described in Figure 5.5.1-1 and Figure 5.5.1-2. |
| An adaptation layer is supported over the second PC5 link (i.e. the PC5 link between Relay UE and Destination UE) for L2 UE-to-UE Relay. For L2 UE-to-UE Relay, the adaptation layer is put over RLC sublayer for both CP and UP over the second PC5 link. The sidelink SDAP/PDCP and RRC are terminated between two Remote UEs, while RLC, MAC and PHY are terminated in each PC5 link. |
| For the first hop of L2 UE-to-UE Relay, |
| - The N:1 mapping is supported by first hop PC5 adaptation layer between Remote UE SL Radio Bearers and first hop PC5 RLC channels for relaying. |
| - The adaptation layer over first PC5 hop between Source Remote UE and Relay UE supports to identify traffic destined to different Destination Remote UEs. |
| For the second hop of L2 UE-to-UE Relay, |
| - The second hop PC5 adaptation layer can be used to support bearer mapping between the ingress RLC channels over first PC5 hop and egress RLC channels over second PC5 hop at Relay UE. |
| - PC5 Adaptation layer supports the N:1 bearer mapping between multiple ingress PC5 RLC channels over first PC5 hop and one egress PC5 RLC channel over second PC5 hop and supports the Remote UE identification function. For L2 UE-to-UE Relay, |
| - The identity information of Remote UE end-to-end Radio Bearer is included in the adaptation layer in first and second PC5 hop. |
| - In addition, the identity information of Source Remote UE and/or the identity information of Destination Remote UE are candidate information to be included in the adaptation layer, which are to be decided in WI phase. |

According to the specified scenario (RAN2#119-e and RAN2#120), a multipath relay is defined as shown in Tables 8 to 10.

**[Table 8]**

| |
|---|
| RAN2#119-e |
| > RAN2 anticipate benefits from multi-path in the following areas: |
| -Relay and direct multi-path operation (including both scenarios 1 and 2) can provide efficient path switching between direct path and indirect path |
| -The remote UE in multi-path operation can provide enhanced user data throughput and reliability compared to a single link |
| -gNB can offload the direct connection of the remote UE in congestion to indirect connection via the relay UE (e.g. at different intra/inter-frequency cells) |
| > RAN2 can confirm the justifiable benefits that multi-path with relay and UE aggregation can improve the throughput and reliability/robustness, e.g., for UE at the edge of a cell, and UE with limited UL transmission power. |
| > The terms "relay UE" and "remote UE" are used for scenarios 1 and 2. FFS if we would use additional terms specific to scenario 2. |
| >Confirm the remote UE in Scenario 1 and the remote UE in Scenario 2 as follows: |
| - Scenario 1: the remote UE is connected to the same gNB using one direct path and one indirect path via 1) Layer-2 UE-to-Network relay, |
| - Scenario 2: the remote UE is connected to the same gNB using one direct path and one indirect path via 2) via another UE (where the UE-UE inter-connection is assumed to be ideal). |
| > RAN2 assumes that the relation between remote UE and relay UE in scenario 2 is pre-configured or static and how the relation is pre-configured or static is out of the 3GPP scope. |
| > RAN2 deprioritizes discussion on authorization and association mechanism between remote UE and relay UE in scenario 2. |
| > Support the following cell deployment scenarios for multi-path relaying in Rel-18: |
| -Scenario C1: The relay UE and remote UE are served by a same cell. |
| -Scenario C2: The relay UE and remote UE are served by different intra-frequency cells of a same gNB |
| -Scenario C3: The relay UE and remote UE are served by different inter-frequency cells of a same gNB |
| > Support the following sidelink scenarios for multi-path: |
| - Scenario S1: SL TX/RX and Uu share the same carrier at the remote UE. |
| - Scenario S2: SL TX/RX and Uu use different carriers at the remote UE. |
| - Scenario S3: SL TX/RX and Uu share the same carrier at the relay UE. |
| - Scenario S4: SL TX/RX and Uu use different carriers at the relay UE. |
| >Support direct bearer (bearer mapped to direct path on Uu), indirect bearer (bearer mapped to indirect path via relay UE), and MP split bearer (bearer mapped to both paths, based on the existing split bearer framework). |
| > For a MP split bearer in scenario 1, one PDCP entity at the remote UE is configured with one direct Uu RLC channel and one indirect PC5 RLC channel. |
| -For upstream, a PDCP entity delivers to a Uu RLC entity and a PC5 RLC entity with SRAP entity in the remote UE side. |
| - For downstream, a PDCP entity receives from a Uu RLC entity and a PC5 RLC entity with SRAP entity in the remote UE side. |
| > FFS if we need to take decisions on the mapping of protocol entities in scenario 2. |

**[Table 9]**

| |
|---|
| RAN2#119bis-e |
| >The following cases are to be supported for Scenario 1. |
| - A. The remote UE operating only on the direct path adds the indirect path under the same gNB; |
| - B. The remote UE operating only on the indirect path adds the direct path under the same gNB; |
| - C. The remote UE operating in multi-path releases the indirect path; |
| - D. The remote UE operating in multi-path releases the direct path; |
| - G. The remote UE operating in multi-path changes to a new relay UE for the indirect path while keeping the direct path under the same gNB. FFS if this case would be supported via separate release-and-add (A+C in separate reconfigurations) or a single switch procedure (e.g. similar to i2i service continuity). |
| > The following case is to be not supported for Scenario 1 as a group mobility scenario. |
| - F. The remote UE configured with multi-path keeps the serving relay UE for the indirect path and the serving cell of the remote UE for the direct path while the serving relay UE changes the serving cell of the relay UE under the same gNB; |
| > The following case can be supported via separate release-and-add for scenario 1 (B+D in separate reconfigurations): |
| - E. The remote UE operating in multi-path changes the direct path to a different cell of the same gNB while using the serving relay UE for the indirect path under the same gNB. |
| - FFS if a single procedure for this case would be supported. |
| > The following cases are proposed to be supported for Scenario 2. |
| - A. The remote UE configured only on the direct path adds the indirect path under the same gNB; |
| - C. The remote UE configured with multi-path releases the indirect path; |
| > The following case is proposed to be not supported for Scenario 2. |
| - F. The remote UE configured with multi-path keeps the serving relay UE for the indirect path and the serving cell of the remote UE for the direct path while the serving relay UE changes the serving cell of the relay UE under the same gNB; |
| > Whether to support the following case can be further discussed for Scenario 2. |
| - B. The remote UE configured only on the indirect path adds the direct path under the same gNB; |
| - D. The remote UE configured with multi-path releases the direct path; |
| - E. The remote UE configured with multi-path changes the serving cell of the remote UE for the direct path while keeping the serving relay UE for the indirect path under the same gNB; |
| - G. The remote UE configured with multi-path changes to a new relay UE for the indirect path while keeping the direct path under the same gNB. |
| > For scenario 1, SRB1 and SRB2 can be configured on either the direct or the indirect path, or on both at least with duplication. FFS if they can be configured on different paths from one another. |
| > For scenario 2, SRB1 and SRB2 can be configured at least on the direct path. FFS if there are restrictions on the configuration and if they can be configured on both paths. |
| > FFS CPDU submission; if legacy CPDU submission behaviour is supported, the primary RLC entity of the MP split bearer for DRB can be configured on any of the paths for Scenario 1. |
| > PDCP DRB duplication is supported for the MP split bearer in Scenario 1 based on the existing framework. |
| > PDCP DRB duplication is supported for the MP split bearer in Scenario 2 based on the existing framework. |
| > The relay UE is restricted to serve only one remote UE in Scenario 2. |
| > For Scenario 2, different Uu logical channels are configured for identification of data directed to/originating from the relay UE and data relayed from/to the remote UE over the Uu link of the indirect path, as in Rel-17. |
| > RAN2 assumes that in Scenario 2, without the adaptation layer over non-3GPP link, a PDCP PDU can be delivered to an intended PDCP entity or RLC entity for support of more than one RB over UE-to-UE link based on UE implementation. |
| > RAN2 does not impose a requirement for interoperability between two UEs from different vendors for scenario 2 in this release. |
| > RAN2 understand that UE identification in L2 PDU over non-3GPP link is not in 3GPP scope in Scenario 2. |
| > Do not specify adaptation layer over UE-to-UE link for scenario 2 in RAN2. |
| > UE identification is not needed over Uu link in Scenario 2, if relay UE serves only one remote UE and different Uu RLC channels can be assumed for the remote UE and the relay UE. |
| > Working assumptions: |
| - Bearer identification except LCID is not needed in L2 PDU over Uu link in Scenario 2. Only 1:1 bearer mapping is supported over Uu link for the indirect path. FFS how to configure the mapping. |
| - Without the adaptation layer over Uu link in scenario 2, a PDCP PDU can be delivered to an intended PDCP entity or RLC entity for support of more than one RB over Uu link e.g. by configuring 1:1 bearer mapping and different Uu RLC channels for relay UE local traffic and relay traffic for PDU delivery. |
| - Do not specify adaptation layer over Uu link for scenario 2 in RAN2. |
| > Multi-path Relay is applicable to RRC _CONNECTED remote-UE, for scenario-1 and scenario-2. |
| > Multi-path Relay is NOT applicable to RRC_IDLE remote-UE, for scenario-1 and scenario-2. |
| > For multi-path Relay, support RRC_IDLE/RRC_INACTIVE target relay UE, for the path switching scenario where there is an addition of indirect path or a change of indirect path. |
| > When UE operating in multi-path Relay, it performs RLM for Uu interface, for Scenario-1 and Scenario-2. For PC5 interface in Scenario-1, it performs sidelink RLF detection based on Rel-16 V2X specification. For UE-UE link in Scenario-2, whether/how to have failure detection is out of 3GPP scope. |
| - FFS whether there is impact to layers under our control from a failure of the UE-UE link in scenario 2. |
| > RAN2 aims at reusing R17 mechanism of paging delivery for R18 U2N Relay on the indirect path and legacy mechanism on the direct path, in the multi-path setting when paging is applicable for RRC_CONNECTED. > Multi-path Relay is NOT applicable to RRC Setup procedure, for scenario-1 and scenario-2. |
| > Working assumption: For multi-path Relay Scenario-2, leave it to relay and remote UE implementation on how to trigger the RRC_IDLE/RRC_INACTIVE target relay UE to initiate RRC connection establishment procedure. RAN2 further discuss the solution for Scenario-1. |
| > Multi-path Relay is NOT applicable to RRC _INACTIVE remote-UE, for scenario-1 and scenario-2. Support storing direct path configuration for potential resume as legacy operation (to single-path configuration), FFS if the UE can also store indirect path configuration and resume directly into multi-path. |
| > Multi-path Relay is NOT applicable to RRC Resume procedure, for scenario-1 and scenario-2. RAN2 further study how for UE operating in multi-path Relay operate for RRC Re-establishment procedure. |

**[Table 10]**

| |
|---|
| RAN2#120 |
| > Support PCell on the direct path only when the UE is in multi-path operation, for both scenario 1 and scenario 2. |
| > RAN2 confirms the following WA for Scenario 2. |
| - Bearer identification except LCID is not needed in L2 PDU over Uu link in Scenario 2. Only 1:1 bearer mapping is supported over Uu link for the indirect path. FFS how to configure the mapping. |
| - Without the adaptation layer over Uu link in scenario 2, a PDCP PDU can be delivered to an intended PDCP entity or RLC entity for support of more than one RB over Uu link e.g. by configuring 1:1 bearer mapping and different Uu RLC channels for relay UE local traffic and relay traffic for PDU delivery. |
| - Do not specify adaptation layer over Uu link for scenario 2 in RAN2. |
| > How to configure 1:1 bearer mapping and potential spec impact can be discussed in normative phase. |
| > In principle, Mode 1 RA can be supported for the remote UE configured with multi-path in Scenario 1. |
| > RAN2 confirms that split SRB can be configured with or without duplication as a baseline, for both scenarios (assuming it is supported in scenario 2 as proposed elsewhere). Further restrictions can be discussed in normative phase. > For scenario 2, non-split SRB1/2 is allowed to be configured on direct path. |
| > Remote UE storing indirect path configuration (e.g., SRAP and PC5-RLC channel configurations) and resuming directly into multi-path configuration is not supported for scenario 1. |
| > If CSS for SI is configured within the active BWP on PCell, the remote UE can perform direct system information acquisition on PCell as currently specified in 38.331; besides, dedicated signaling can be used to deliver SIB via SRB1 configured on direct and/or indirect path as currently specified in 38.331. |
| > Upon detection of 3GPP-defined RLF failure in one path, remote UE (configured with MP) can report path failure via the alternative available path if SRB1 is configured on the alternative path or split SRB1 is configured. |
| > PDCP Control PDU is not duplicated. |
| > RAN2 do not define a control plane primary path concept in the study phase; FFS if something needs to be defined in normative work, but it should be driven by functionality and technical benefits. |
| > Case B and case D are not supported for Scenario 2. |
| > For Scenario 2, Case E is not supported. |
| > For Scenario 2, whether to support Case G is discussed in normative phase, but RAN2 will not do additional work to enable it for Scenario 2 over Scenario 1. |
| > Whether SRB1/2 can be configured in different path for Scenario 1 can be discussed in normative phase. |
| > Whether non-split SRB1/2 is allowed to be configured on indirect path for scenario 2 and whether split SRB1/2 is supported for scenario 2 can be discussed in normative work. |
| > Remote UE storing indirect path configuration or not and use it to resume to MP configuration in scenario 2 is not supported. |
| > RAN2 will downselect the solution for triggering IDLE/INACTIVE relay UE to enter CONNECTED state from: |
| - Option 1 (SL-RLC or UP-based approach (excluding SL-RLC1)), |
| - Option 3 (PC5-RRC approach) |
| - Option 4( RRCReconfigurationComplete-based approach), |
| Discovery/PC5-S-based solution can be further discussed if initiated from SA2. |
| > Multi-path relay study phase is complete and can proceed to normative work from RAN2 perspective, for both scenarios 1 and 2 |

In relation to improvements in a NR sidelink relay, the improvements shown in Table 11 below have been discussed in the specified scenario (New Rel-18 WID on NR sidelink relay enhancements).

**[Table 11]**

| |
|---|
| 3. Study the benefit and potential solutions for multi-path support to enhance reliability and throughput (e.g., by switching among or utilizing the multiple paths simultaneously) in the following scenarios [RAN2, RAN3]: |
| A. A UE is connected to the same gNB using one direct path and one indirect path via 1) Layer-2 UE-to-Network relay, or 2) via another UE (where the UE-UE inter-connection is assumed to be ideal), where the solutions for 1) are to be reused for 2) without precluding the possibility of excluding a part of the solutions which is unnecessary for the operation for 2). |
| Note 3A: Study on the benefit and potential solutions are to be completed in RAN#98 which will decide whether/how to start the normative work. |
| Note 3B: UE-to-Network relay in scenario 1 reuses the Rel-17 solution as the baseline. |
| Note 3C: Support of Layer-3 UE-to-Network relay in multi-path scenario is assumed to have no RAN impact and the work and solutions are subject to SA2 to progress. |

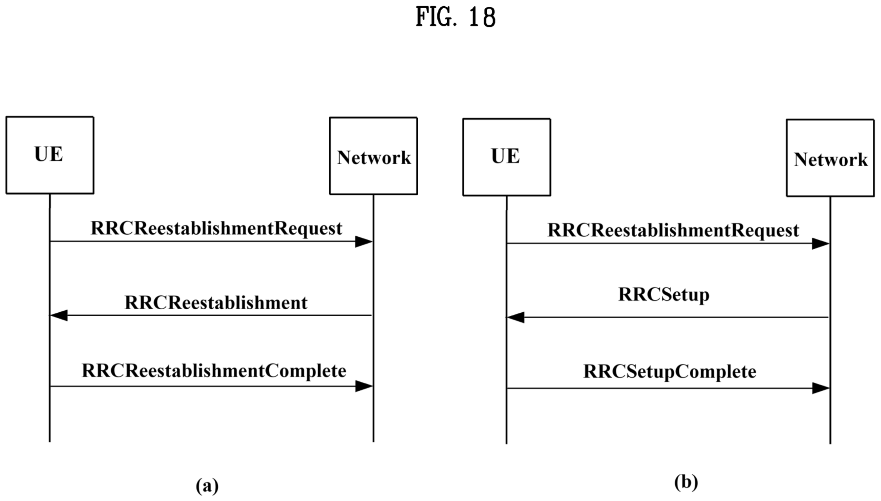

FIG. 18 is a diagram for explaining a method of reestablishing an RRC connection.

Referring to FIG. 18(a), the UE may transmit an RRCReestablishmentRequest message to the network to request RRC reestablishment. The network may transmit an RRCReestablishment message to the UE based on the RRCReestablishmentRequest message. The UE then performs RRC reestablishment based on the received RRCReestablishment message. Once the RRC reestablishment is completed, the UE may transmit an RRCReestablishmentComplete message to the network (refer to Clauses 5.3.7.1 to 5.3.7.6 in TS 38.331).

Referring to FIG. 18(b), the UE may transmit an RRCReestablishmentRequest message to the network to request requesting RRC reestablishment. The network may transmit an RRCSetup message to the UE based on the RRCReestablishmentRequest message. The UE then performs RRC reestablishment based on the RRCSetup message. Once the RRC reestablishment is completed, the UE may transmit an RRCSetupComplete message to the network (refer to Clauses 5.3.7.1 to 5.3.7.6 in TS 38.331).

Hereinbelow, a method for allocating a local ID and transmitting data based on the local ID in a U2U relay operation will be described in detail.

### Timing of Setting Local ID for UE-to-UE (U2U) Relay Operation

### 1. Case where a source remote UE allocates local IDs for a relay UE and a target remote UE.

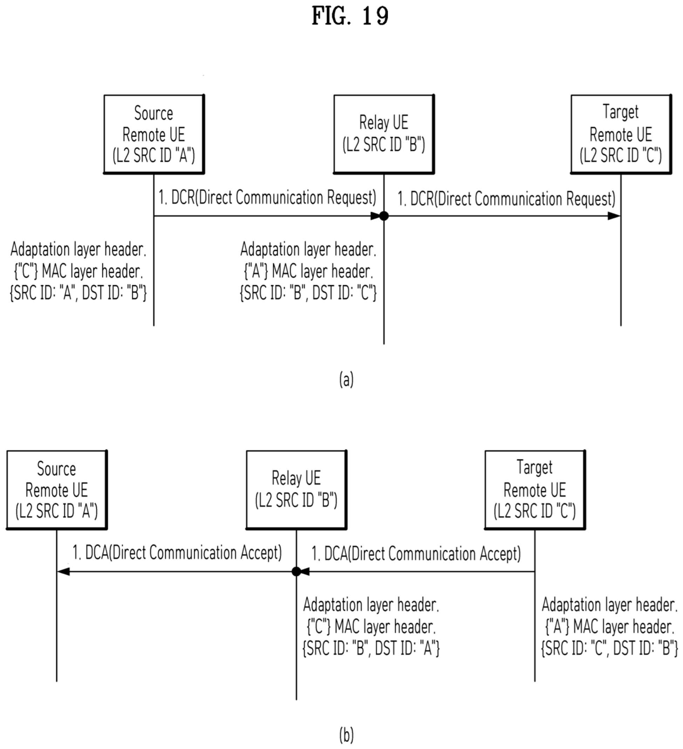

FIGS. 19 to 21 are diagrams illustrating a method for transmitting a message via SRB1/SRB2 in a U2U relay operation.

Referring to FIG. 19(a), a direct communication request (DCR) message broadcast by a source remote UE and/or a relay UE may be transmitted via a new SL-signaling radio bearer (SRB) 0-like bearer for a U2U relay operation, which is different from existing SL-SRB 0. This is to allow the target remote UE and/or relay UE receiving the DCR message to identify that the DCR message is for the U2U relay operation. For a similar reason, a new SL-SRB1-like bearer and an SL-SRB2-like bearer may be established for the U2U relay operation, and an SL-SRB1 message used for security establishment and an SL-SRB2 message used for transmitting a PC5-S message such as security and DCA may be transmitted on the newly established bearers. For the same reason, for SL-SRB3 and SL-SRB4 messages, new SL-SRB3-like and SL-SRB4-like bearers may be established for the U2U relay operation. In the case of information for the U2U relay operation, messages transmitted via existing SRB3 and SRB4 may be transmitted via the SL-SRB3-like and SL-SRB4-like bearers.

Referring to FIG. 19(b), the target remote UE may transmit a direct communication accept (DCA) message to the source remote UE via the relay UE. Specifically, when the target remote UE transmits the message via SL-SRB1(/SL-SRB2/SL-SRB3/DRB), an adaptation layer header for the U2U relay operation should include a final destination (DST) L2 ID (i.e., the source (SRC) L2 ID of the source remote UE). This is done for the target remote UE to inform the relay UE through the adaptation layer header that the final destination is the source remote UE, although the target remote UE transmits the message with the SRC L2 ID of the relay UE as the DST L2 ID of a MAC layer. Upon receipt of the message, the relay UE may interpret the L2 ID included in the adaptation layer header as the final destination of the message, corresponding to the source remote UE. In other words, when the relay UE receives the message from the target remote UE and forwards the received message to the source remote UE, the DST L2 ID of a forwarded MAC PDU is set to the L2 ID included in the received adaptation layer header and transmitted. On the other hand, when the source remote UE transmits a message to the target remote UE, the above method may also be applied by replacing the source remote UE with the target remote UE.

When the relay UE transmits a message (a DCA message) from the target remote UE to the source remote UE via SL-SRB1(/SL-SRB2/SL-SRB3/DRB), an adaptation layer header for the U2U relay operation should include the SRC L2 ID of the target remote UE. This is done for the relay UE to inform the source remote UE through the adaptation layer header that the UE that initially generated data is the target remote UE, even though the relay UE transmits a MAC PDU with the SRC ID of the relay UE and the SRC L2 ID of the source remote UE as the destination. Upon receipt of the message, the source remote UE may interpret the UE corresponding to the L2 ID included in the adaptation layer header of the message as the UE that transmitted the message. In other words, when the relay UE receives a message from the target remote UE and forwards it to the source remote UE, the ID included in the adaptation layer header of the forwarded message is set to the SRC L2 ID of the target remote UE that the relay UE received (refer to FIG. 19(b)). On the other hand, when the source remote UE transmits a message to the target remote UE, the above method may also be applied by replacing the source remote UE with the target remote UE.

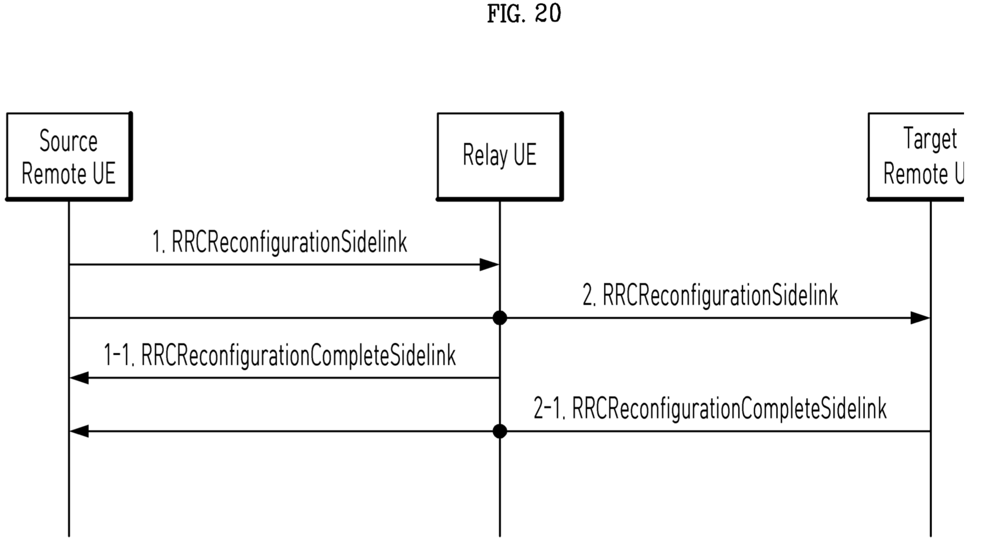

Referring to FIG. 20, the source remote UE may transmit an RRC message (e.g., RRCReconfigurationSidelink message) to the target remote UE via the relay UE. In this case, a local ID may be allocated in the RRC message. The local ID may be set to the same (/different) value depending on a link between the source remote UE and the relay UE, and/or a link between the relay UE and the target remote UE. The local ID may also be determined/allocated based on the pair of the source remote UE and the target remote UE. The above-described local ID value may be information included in an adaptation layer header, when a message is transmitted via (some) SRB3 and/or DRB. This local ID value may be determined by a higher layer of the source remote UE and allocated not only in a PC5-RRC message but also in a PC5-S message. When the target remote UE transmits a response RRC message (e.g., RRCReconfigurationCompleteSidelink message) to the source remote UE via the relay UE, the above method may be applied by replacing the source remote UE with the target remote UE, and the target remote UE with the source remote UE.

Alternatively, the source remote UE may allocate a local ID value to the relay UE. When the source remote UE allocates a local ID to the relay UE, the source remote UE may allocate the SRC L2 ID of the target remote UE and the local ID value to be allocated together to the relay UE. Alternatively, the source remote UE may allocate a mapping relationship between the SRC L2 ID of the source remote UE and the local ID to the relay UE. Alternatively, the source remote UE may also allocate a mapping relationship between the local ID and a bearer to the relay UE.

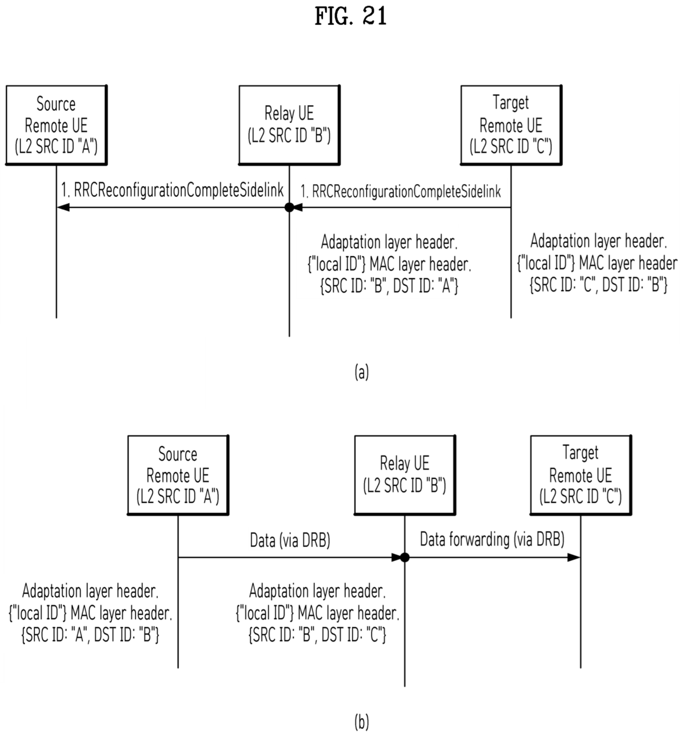

Alternatively, when the source remote UE allocates a local ID to the target remote UE via the relay UE by an RRC message (e.g., RRCReconfigurationSidelink), the RRC message (or an RRCReconfigurationSidelink message for allocating an initial local ID) may include (identification) information in the adaptation layer header, as described above. That is, the adaptation layer header of the RRC message (e.g., RRCReconfigurationSidelink message) transmitted to the relay UE by the source remote UE may include the SRC L2 ID of the target remote UE. When the relay UE receiving the message transmits the RRC message to the target remote UE, the SRC L2 ID of the source remote UE may be included in the adaptation layer of the RRC message. Referring to FIG. 21(a), the target remote UE that has received the RRC message may transmit a response RRC message (e.g., RRCReconfigurationCompleteSidelink message) to the source remote UE via the relay UE. In this case, the adaptation layer header of the response RRC message may be applied in the same manner as described above. Alternatively, as illustrated in FIG. 21(a), the above-described local ID, instead of the SRC L2 ID of the source remote UE, may be included in the adaptation layer of the response RRC message (e.g., RRCReconfigurationCompleteSidelink message).

Alternatively, referring to FIG. 21(b), data/a message may be forwarded from the source remote UE to the target remote UE. In this case, the allocated local ID may be used in the adaptation layer header of the data/message.

Alternatively, the target remote UE (or the source remote UE) may also include and transmit the local ID in the DCA message illustrated in FIG. 19(b).

Alternatively, when the source remote UE selects the relay UE, an initial SL connection for a first hop (or a connection of the first hop) may be established/formed between the source remote UE and the relay UE. When the SL connection for the first hop is completed, the source remote UE may transmit a local ID that it has generated/allocated (for the source remote UE and/or the target remote UE) to the relay UE by a separate PC5-RRC/S message. The relay UE may also forward the local ID allocated by the source remote UE to the target remote UE through a PC5-S/RRC message.

### 2. Case where a relay UE allocates local IDs to a source remote UE and a target remote UE

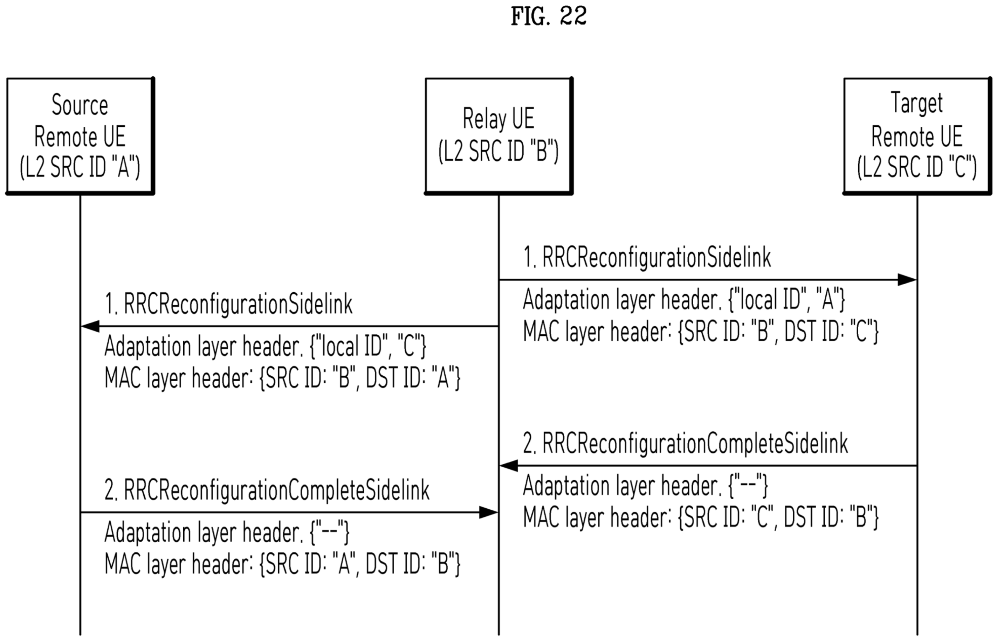

FIG. 22 is a diagram illustrating a method for allocating a local ID by a relay UE.

In a U2U relay operation, the relay UE may establish an SL bearer for each of the source remote UE and the target remote UE. In addition, the relay UE may set/allocate a local ID for each of the source remote UE and the target remote UE. In this case, the local IDs allocated to the source remote UE and the target remote UE may have a single value determined based on the pair of the source remote UE and the target remote UE. Alternatively, the local ID used between the source remote UE and the relay UE and the local ID used between the target remote UE and the relay UE may be different, but a mapping relationship between the two local IDs may be stored in the relay UE. In this case, the local IDs may be allocated by the higher/PC5-RRC layer of the relay UE.

Specifically, referring to FIG. 22, the relay UE may allocate the local IDs to the source remote UE and the target remote UE by RRC messages (1. RRCReconfigurationSidelink messages). When allocating the local ID to the source remote UE, the relay UE may include the SRC L2 ID of the target remote UE and the local ID together in the adaptation layer header (of the message) to indicate the target remote UE which the communication is for. Similarly, when allocating the local ID to the target remote UE, the relay UE may include the SRC L2 ID of the source remote UE and the local ID together in the adaptation layer header (of the message) to indicate which source remote UE the communication is for. In this case, the relay UE may receive a response RRC message (2. RRCReconfigurationCompleteSidelink message) from each of the source remote UE and the target remote UE. When the source remote UE and the target remote UE transmit the response RRC messages (RRCReconfigurationCompleteSidelink messages) to the relay UE, the local ID values may not be included in the adaptation layer headers of the response RRC messages, as illustrated in FIG. 22. Thereafter, when the source remote UE transmits data to the target remote UE via a data radio bearer (DRB), the local ID may be included in the adaptation layer of the data.

On the other hand, the proposed method for a DCR message described above may be applied in the same/similar manner for transmission of a discovery message.

Alternatively, when the source remote UE selects the relay UE, the source remote UE may establish/form an SL connection for U2U relay with the selected relay UE. In addition, the relay UE may establish an SL connection with the target remote UE. When the SL connections of the first and second hops are completed, the relay UE may allocate a local ID to the source remote UE and the target remote UE (or allocate different local IDs for the first and second hops). In this case, the relay UE may allocate/transmit the local ID to each of the source remote UE and the target remote UE by a PC5 RRC/S message. When the source remote UE transmits an SL setup message for an e2e connection with the target remote UE via the relay UE, the source remote UE may transmit the SL setup message for the e2e connection using the allocated local ID.

Alternatively, upon receipt of a DCR/DCA/Discovery message from the source remote UE/target remote UE, the relay UE may allocate the local ID in a message that forwards the received DCR/DCA/Discovery message.

Alternatively, when the relay UE allocates a local ID, the relay UE may allocate a local ID for the target remote UE and/or a local ID for the source remote UE to the source remote UE. In addition, the relay UE may allocate the local ID for the source remote UE and/or the local ID for the target remote UE to the target remote UE.

Alternatively, when the source remote UE selects the relay UE, the source remote UE may transmit an SL-RRC message (e.g., RRCReconfigurationSidelink message) to the relay UE to establish an SL connection for U2U relay with the selected relay UE. The relay UE may already know in advance (or may be assumed to know in advance) through the discovery/DCR/DCA message, which target remote UE the source remote UE wants to establish an SL connection with via the SL-RRC message. In this case, the relay UE may allocate the local ID for the source remote UE/target remote UE and transmit the allocated local ID to the source remote UE through a response SL RRC message (e.g., RRCReconfigurationCompleteSidelink message). In addition, when the SL connection of the first hop is completed between the source remote UE and the relay UE, the relay UE may expect to establish an SL connection with the target remote UE. In this case, the relay UE may allocate another local ID (or an ID for the pair of the source remote UE and the target remote UE) associated with the local ID already allocated to the source remote UE to the target remote UE. That is, the relay UE may include the local ID for the target remote UE/source remote UE in an SL-RRC message (e.g., RRCReconfigurationSidelink message) for establishing an SL connection with the target remote UE and transmit the SL-RRC message. When the SL connections of the first and second hops are completed, the source remote UE and the target remote UE may know their (and each other's) local IDs, and thus the source remote UE and the target remote UE may include the local IDs in the adaptation layers of subsequent messages/data transmitted in communication.

Alternatively, there may be a message that needs to be transmitted before the relay UE (and/or source remote UE/target remote UE) allocates the local ID (a message to be transmitted from the source remote UE to the target remote UE, for example, an (initial) RRCReconfigurationSidelink message via the relay UE). In this case, an L2-ID may be exceptionally included in an SRAP header of the message. This is because since the local ID has not been allocated yet, the L2 ID should be used in the SRAP header. However, after the local ID is allocated, only the local ID should be used in the SRAP header of the message transmitted from the source remote UE to the target remote UE. To identify whether a message (the initial RRCReconfigurationSidelink message) is transmitted before the local ID is allocated, a specific configuration (e.g., SL-RLC3) may be configured. That is, the (source/target remote UE) L2 ID may be used in the SRAP header of a message transmitted via an SL-RLC configured by the specific configuration.

As described above, since the source remote UE and the target remote UE are related to the direction of a data transmission in the above methods, the source remote UE and the target remote UE may be interpreted interchangeably. In addition, it is obvious that in the proposed method described above, the relay UE may be broadly interpreted as a gNB, IAB-node, or the like.

As such, the proposed disclosure is about a method for setting/allocating a local ID and an entity responsible for the setting/allocation in a U2U relay operation. As data is transmitted with a local ID, which has been allocated by the proposed method, included in an adaptation layer header, the proposed disclosure may significantly reduce header overhead in communication between a source relay UE and a target relay UE.

Hereinafter, a method for performing a QoS for a U2U relay operation by a source remote UE or a relay UE will be described in detail. The above-described method for allocating and using a local ID may be obviously applied to a method related to performing QoS split described below.

### QoS Split for U2U Relay Operation

### 1. Case where a relay UE performs QoS split

A serving cell/serving BS of the relay UE may perform QoS split related to U2U relay. For this purpose, the relay UE may report QoS-related information (e.g., QoS information related to an end-to-end link, or e2e QoS) received from a source remote UE (or a target remote UE) to the serving cell/serving BS. The end-to-end link may include a first hop connection between the source remote UE and the relay UE and a second hop connection between the relay UE and the target remote UE. Upon receipt of the QoS-related information, the serving cell/serving BS of the relay UE may split a QoS (or e2e QoS) related to the U2U relay and transmit split QoS information for the split QoS to the relay UE. For example, the serving cell/serving BS may perform the QoS split operation of splitting at least one value/parameter included in the QoS-related information into a value/parameter for a first hop and a value/parameter for a second hop. The relay UE may then transmit the received split QoS information to the source remote UE and/or the target remote UE. The relay UE may also be a relay UE that operates based on SL resource allocation mode 1.

Alternatively, the relay UE may directly perform the QoS split for the U2U operation. For example, the relay UE may receive information about the QoS related to the e2e connection (or information about the e2e QoS) from the source remote UE, and split the e2e QoS value based on a first quality (sidelink discovery reference signal received power/sidelink reference signal received power (SL/SD-RSRP)) measured for the first hop connection and a second quality (SL/SD-RSRP) measured for the second hop connection. For example, when a packet delay budget (PDB) included in the e2e QoS is 10ms, the relay UE may split the 10ms PDB into 3ms for the first hop and 7ms for the second hop based on the first and second qualities. In this case, when the relay UE performs the QoS split, it should report the split QoS information to the serving cell/serving BS. The split QoS information that the relay UE reports to the serving BS may be limited to split QoS information for the second hop. In other words, the relay UE may report (only) the split QoS for the second hop out of the split QoS for the first hop and the split QoS for the second hop to the serving cell/serving BS. This is because data transmitted by the relay UE is transmitted to the target remote UE. In other words, since the relay UE transmits data to the target remote UE via the second hop connection, it needs to receive a resource allocation for the second hop connection with the target remote UE from the serving BS. For example, when the relay UE splits the e2e QoS into a first split QoS for the first hop and a second split QoS for the second hop, the relay UE may report only the second split QoS to the serving BS. The serving BS may perform resource allocation for the relay UE (i.e., resource (re)allocation/resource pool (re)allocation for the second hop connection) and/or (re)configuration for an SL configuration based on the second split QoS. The second split QoS may also be reported to the BS through sidelink UE information (SUI). The relay UE may also be a relay UE that operates based on SL resource allocation mode 1.

Alternatively, the relay UE may split the QoS (e2e QoS) value for the first hop and the second hop, and when reporting a split second QoS value/information for the second hop to the serving BS, it may also report the ID (e.g., L2 ID) of the target remote UE.

Alternatively, the QoS split/QoS split operation may be performed by the relay UE, and the relay UE (or the relay UE in the RRC _CONNECTED state) may report the split QoS value (e.g., the split QoS value for the second hop) to its serving BS. The BS may perform resource allocation for the relay UE (e.g., (re)allocation of a resource pool for sidelink resource allocation mode 2) by referring to the split QoS value/split QoS information.

### 2. Case where a source remote UE performs QoS split

The source remote UE may report its QoS information (e.g., e2e QoS information) to a serving BS and also provide an indication indicating that QoS split is needed (requesting for QoS split) for a U2U operation. In this case, the source remote UE may also report an SL signal strength of a first hop connection and/or a second hop connection, which serves as a basis for the QoS split. The BS may perform the QoS split and inform the source remote UE of a split QoS value/information for the U2U operation. The source remote UE may inform a relay UE of the split QoS value/information. This is because the relay UE needs to use the split QoS value, when transmitting SL data over the second hop. In addition, the relay UE (the relay UE operating in SL resource allocation mode 1 or SL resource allocation mode 2 and in the RRC_CONNECTED state) may also report the split QoS value/information received from the source remote UE to its serving BS (so that the serving BS of the relay UE may consider it for resource allocation and resource pool configuration for data transmission over the second hop). The source remote UE may also operate in SL resource allocation mode 1.

Alternatively, the QoS split operation may be performed by the source remote UE. In this case, the source remote UE may report only a split QoS value/information for the first hop to its serving BS (that is, so that the split QoS value may be considered for resource allocation for data transmission over the first hop). In addition, the source remote UE may also inform the relay UE of the split QoS information (so that the relay UE may consider the split QoS value, when selecting resources for data transmission over the second hop). Further, when the relay UE operates in mode 1 or in the RRC _CONNECTED state (even if operating in mode 2), the relay UE may also report the split QoS value/information received from the source remote UE to its serving BS (so that the serving BS may consider the split QoS value for the second hop in resource allocation and resource pool configuration for data transmission over the second hop).

Alternatively, even if the source remote UE performs the QoS split operation directly, it may still report the split QoS value/information to its serving BS (only when the source remote UE is in the RRC_CONNECTED state). The BS of the source remote UE may reconfigure a resource pool for data transmission over the first hop based on the split QoS value/information.

On the other hand, since the source remote UE and the target remote UE may be changed depending on the direction of a data transmission in the proposed disclosure, the source remote UE and the target remote UE may be interpreted/defined interchangeably.

According to the proposed method described above, a source remote UE/a target remote UE/a serving cell of a relay UE receives a report of a split QoS value/information for each of first and second hops in a U2U relay operation, thereby enabling appropriate resource allocation for a split QoS value corresponding to each hop.

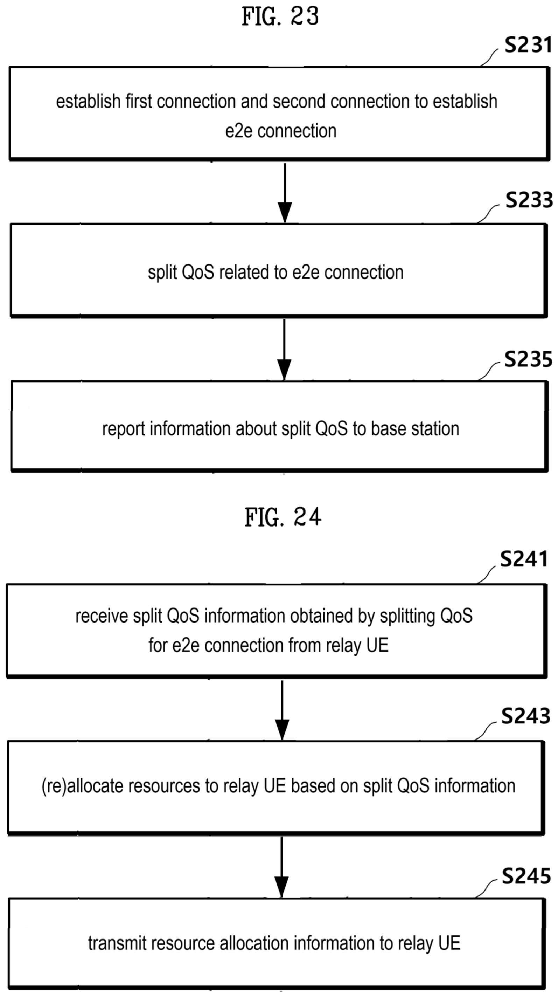

FIG. 23 is a diagram illustrating a method for performing U2U relay communication by a relay UE.

Referring to FIG. 23, the relay UE may establish a first connection with a first UE and a second connection with a second UE (S231). Specifically, the relay UE may configure/establish a connection (PC5 RRC connection) with the first UE through a discovery procedure with the first UE. The relay UE may establish the second connection with the second UE that the first UE wants to connect to. At this time, the relay UE may allocate a local ID to each of the first UE and the second UE through an RRC message. In this case, the first UE may establish an e2e connection (or e2e PC5 RRC connection) between the first UE and the second UE via the relay UE.

Subsequently, the relay UE may split an (e2e) QoS related to the e2e connection (S233). Specifically, the relay UE may receive e2e QoS information about the e2e QoS or a QoS profile, which is related to the e2e connection, from the first UE. The relay UE may split the e2e QoS included in the e2e QoS information for each of the first connection (or a first hop) and the second connection (or a second hop). For example, the relay UE may split the e2e QoS into a first split QoS for the first connection and a second split QoS for the second connection based on a signal strength of the first connection and a signal strength of the second connection. Alternatively, the relay UE may split a packet data budget (PDB) for each connection, among the values of the e2e QoS. For example, the relay UE may split the PDB into a first PDB for the first connection and a second PDB for the second connection, among the values of the e2e QoS. Alternatively, the relay UE may split the e2e QoS into a first split QoS for the first connection and a second split QoS for the second connection based on a split QoS list configured by its BS.

Thereafter, the relay UE may report split QOS information about the split e2e QoS (or split QoS) to its BS (serving gNB or serving cell) (S235). When the relay UE splits the e2e QoS into the first split QoS for the first connection (or the first hop between the first UE and the relay UE) and the second split QoS for the second connection (or the second hop between the relay UE and the second UE), the relay UE may report information about the second split QoS to its BS. In other words, the relay UE may report only the second split QoS out of the first split QoS and the second split QoS as the split QoS information to the BS. This is because the relay UE performs data transmission to the second UE via the second connection, and thus the relay UE needs to receive a resource allocation for the second connection from its BS.

Alternatively, the relay UE may transmit information about the first split QoS for the first connection (or first hop) to the first UE, and transmit the second split QoS for the second connection (or second hop) to the second UE. In addition, as described above, the relay UE may report the information about the second split QoS to its BS in order to receive a resource allocation related to its second connection, which is suitable for the second split QoS. Alternatively, the relay UE may also report an ID (e.g., L2 ID) of the second UE along with the second split QoS to its BS. Alternatively, when reporting the information about the first split QoS to the first UE, the relay UE may also transmit the information about the e2e QoS connected to the first split QoS to the first UE along with the first split QoS in order to let the first UE know what QoS the first split QoS is a split of.

The first UE may be the source remote UE described above, and the second UE may be the target remote UE described above.

FIG. 24 is a diagram illustrating a method for allocating resources to a relay UE by a BS.

Referring to FIG. 24, the BS may receive a report of split QoS information, which is information about a QoS split from a QoS related to an e2e connection, from the relay UE (S241). The relay UE may be in a state where a first connection has been established with a first UE and a second connection has been established with a second UE, for an e2e connection between the first UE and the second UE via the relay UE. When the relay UE splits the QoS (e.g., e2e QoS) related to the e2e connection into a first split QoS for the first connection and a second split QoS for the second connection, the BS may receive only the second split QoS out of the first split QoS and the second split QoS as the split QoS information from the relay UE. As described above, the split QoS information may include information about a split PDB obtained by splitting the PDB of the e2e QoS.

Thereafter, the BS may allocate resources for the second connection based on the split QoS information (S243). For example, the BS may allocate/reallocate resources and/or a resource pool for the second connection to match the PDB for the second connection included in the split QoS information.

Thereafter, the BS may transmit information about the resources or resource pool allocated for the second connection to the relay UE (S245).

As such, as the relay UE also reports information about a split QoS to the serving BS of the relay UE according to the proposed disclosure, the serving BS may be aware of the split QoS, and thus resources for the second hop, which are suitable for the split QoS, may be (re)allocated to the relay UE by the serving BS. Alternatively, the proposed disclosure may minimize signaling load for QoS split reporting by allowing the relay UE to report only the split QoS for the second hop, and not all of the split QoS information (and e2e QoS) for both the first hop and the second hop, to its BS.

Devices to which the proposed methods described above are applied will be described below in detail.

### Communication system example to which the present disclosure is applied

Although not limited thereto, various descriptions, functions, procedures, proposals, methods, and/or operational flow charts of the present disclosure disclosed in this document may be applied to various fields requiring wireless communication/connection (5G) between devices.

Hereinafter, it will be illustrated in more detail with reference to the drawings. In the following drawings/description, the same reference numerals may exemplify the same or corresponding hardware blocks, software blocks, or functional blocks, unless otherwise indicated.

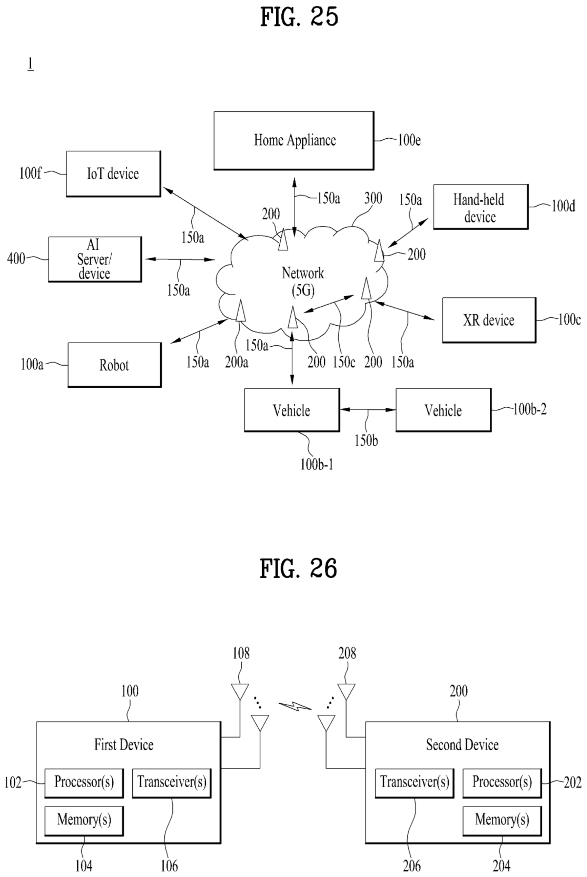

FIG. 25 illustrates a communication system applied to the present disclosure.

Referring to FIG. 25, a communication system 1 applied to the present disclosure includes wireless devices, BSs (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul(IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

### Examples of wireless devices to which the present disclosure is applied

FIG. 26 illustrates a wireless device applicable to the present disclosure.

Referring to FIG. 26, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 25.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information acquired by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

Specifically, the first wireless device or relay UE 100 may include the processor 102 connected to the transceiver 106, and the memory 104. The memory 104 may include at least one program that may execute an operation related to the embodiments described with reference to FIGS. 19 to 24.

The processor 102 may control the transceiver 106 to establish a first connection with a first UE and a second connection with a second UE, for an end-to-end (e2e) connection between the first UE and the second UE via the relay UE, split a quality of service (QoS) related to the e2e connection, and reporting split QoS information for the split QoS to a BS.

Alternatively, a processing device including the processor 102 for controlling a relay UE that performs relay communication and the memory 104 may be configured. In this case, the processing device may include at least one processor, and at least one memory connected to the at least one processor and storing instructions which based on being executed by the at least one processor, cause the relay UE to establish a first connection with a first UE and a second connection with a second UE, for an e2e connection between the first UE and the second UE via the relay UE, split a QoS related to the e2e connection, and report split QoS information for the split QoS to a BS.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information acquired by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Specifically, the second wireless device or BS 200 may include the processor 202 connected to the RF transceiver 206, and the memory 204. The memory 204 may include at least one program that may execute an operation related to the embodiments described with reference to FIGS. 19 to 24.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

### Examples of wireless devices to which the present disclosure is applied

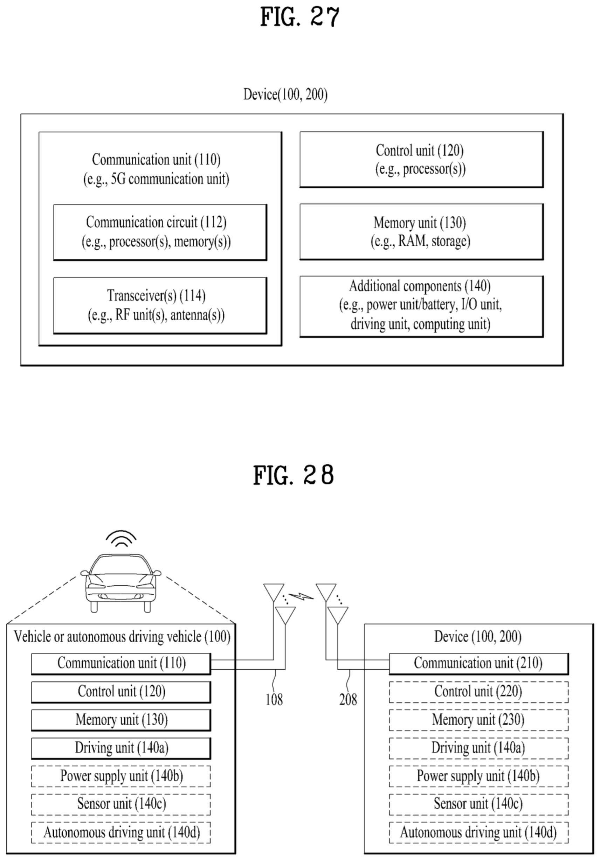

FIG. 27 illustrates another example of a wireless device applied to the present disclosure. The wireless device may be implemented in various forms according to a use-case/service (refer to FIG. 25).

Referring to FIG. 27, wireless devices 100 and 200 may correspond to the wireless devices 100 and 200 of FIG. 26 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 26. For example, the transceiver(s) 114 may include the one or more transceivers 106 and 206 and/or the one or more antennas 108 and 208 of FIG. 26. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 25), the vehicles (100b-1 and 100b-2 of FIG. 25), the XR device (100c of FIG. 25), the hand-held device (100d of FIG. 25), the home appliance (100e of FIG. 25), the IoT device (100f of FIG. 25), a digital broadcast terminal, a hologram device, a public safety device, an MTC device, a medicine device, a fintech device (or a finance device), a security device, a climate/environment device, the AI server/device (400 of FIG. 25), the BSs (200 of FIG. 25), a network node, etc. The wireless device may be used in a mobile or fixed place according to a use-example/service.

In FIG. 27, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

### Examples of vehicles or autonomous vehicles to which the present disclosure is applied

FIG. 28 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 28, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 27, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). Also, the driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the acquired data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly acquired data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

Here, wireless communication technologies implemented in the wireless devices (XXX, YYY) of the present specification may include LTE, NR, and 6G, as well as Narrowband Internet of Things for low power communication. At this time, for example, the NB-IoT technology may be an example of a Low Power Wide Area Network (LPWAN) technology, and may be implemented in standards such as LTE Cat NB1 and/or LTE Cat NB2, and is not limited to the above-described names. Additionally or alternatively, the wireless communication technology implemented in the wireless devices (XXX, YYY) of the present specification may perform communication based on LTE-M technology. In this case, as an example, the LTE-M technology may be an example of LPWAN technology, and may be referred to by various names such as eMTC (enhanced machine type communication). For example, LTE-M technology may be implemented in at least one of a variety of standards, such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and is not limited to the above-described names. Additionally or alternatively, the wireless communication technology implemented in the wireless devices (XXX, YYY) of the present specification is at least one of ZigBee, Bluetooth, and Low Power Wide Area Network (LPWAN) considering low power communication, and is not limited to the above-described names. As an example, ZigBee technology can generate personal area networks (PANs) related to small/low-power digital communication based on various standards such as IEEE 802.15.4, and may be called various names.

The embodiments described above are those in which components and features of the present disclosure are combined in a predetermined form. Each component or feature should be considered optional unless explicitly stated otherwise. Each component or feature may be implemented in a form that is not combined with other components or features. In addition, it is also possible to constitute an embodiment of the present disclosure by combining some components and/or features. The order of operations described in the embodiments of the present disclosure may be changed. Some configurations or features of one embodiment may be included in other embodiments, or may be replaced with corresponding configurations or features of other embodiments. It is obvious that the embodiments may be configured by combining claims that do not have an explicit citation relationship in the claims or may be included as new claims by amendment after filing.

Herein, the embodiments of the present disclosure have been described mainly with a focus on a signal transmission and reception relationship between a UE and a BS. This transmission and reception relationship may be similarly/equally extended to signal transmission and reception between a UE and a relay, or between a BS and a relay. A specific operation described as being performed by a BS in the disclosure may be performed by an upper node in some cases. That is, it is obvious that various operations performed for communication with a UE in a network composed of a plurality of network nodes, including the BS, may be performed by the BS or a network node other than the BS. The term BS may be replaced with terms such as fixed station, Node B, eNode B (eNB), or access point. Further, the term terminal may be replaced with terms such as UE (User Equipment), MS (Mobile Station), or MSS (Mobile Subscriber Station).

An embodiment of the present disclosure may be implemented by various means, for example, hardware, firmware, software, or a combination thereof. In the case of hardware implementation, an embodiment of the present disclosure may be implemented by one or more ASICs (application specific integrated circuits), DSPs (digital signal processors), DSPDs (digital signal processing devices), PLDs (programmable logic devices), FPGAs (field programmable gate arrays), processors, controllers, microcontrollers, or microprocessors.

In the case of firmware or software implementation, an embodiment of the present disclosure may be implemented in the form of a module, a procedure, a function, or the like that performs the functions or operations described above. Software code may be stored in a memory unit and executed by a processor. The memory unit may be located inside or outside the processor and exchange data with the processor by various known means.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

### INDUSTRIAL APPLICABILITY

The above-described embodiments of the present disclosure are applicable to various mobile communication systems.

## Claims

1. A method for performing relay communication by a relay user equipment (UE) in a wireless communication system, the method comprising:
establishing a first connection with a first UE and a second connection with a second UE, for an end-to-end (e2e) connection between the first UE and the second UE via the relay UE;
splitting a quality of service (QoS) related to the e2e connection; and
reporting split QoS information for the split QoS to a base station (BS).

2. The method of claim 1, wherein the QoS related to the e2e connection is split into a first split QoS for the first connection and a second split QoS for the second connection, and
wherein the relay UE reports only the second split QoS out of the first split QoS and the second split QoS as the split QoS information to the BS.

3. The method of claim 1, further comprising receiving information about the QoS related to the e2e connection from the first UE.

4. The method of claim 2, further comprising transmitting information about the first split QoS to the first UE via the first connection.

5. The method of claim 2, further comprising transmitting information about the first split QoS and the information about the QoS related to the information about the first split QoS together to the first UE via the first connection.

6. The method of claim 2, further comprising transmitting information about the second split QoS to the second UE via the second connection.

7. The method of claim 1, wherein the split QoS information includes a split packet delay budget (PDB) value obtained by splitting a PDB value included in the QoS.

8. The method of claim 1, wherein the relay UE splits the QoS based on a signal strength measured for the first connection and a signal strength measured for the second connection.

9. The method of claim 1, further comprising receiving resource allocation information allocated for the second connection based on the split QoS information from the BS.

10. A computer-readable recording medium recording a program for performing the method of claim 1 thereon.

11. A relay user equipment (UE) for performing relay communication in a wireless communication system, the relay UE comprising:
a radio frequency (RF) transceiver; and
a processor connected to the RF transceiver,
wherein the processor controls the RF transceiver to establish a first connection with a first UE and a second connection with a second UE, for an end-to-end (e2e) connection between the first UE and the second UE via the relay UE, split a quality of service (QoS) related to the e2e connection, and report split QoS information for the split QoS to a base station (BS).

12. The relay UE of claim 11, wherein the QoS related to the e2e connection is split into a first split QoS for the first connection and a second split QoS for the second connection, and
wherein the split QoS information includes only the second split QoS out of the first split QoS and the second split QoS.

13. A processing device for controlling a relay user equipment (UE) that performs relay communication in a wireless communication system, the processing device comprising:
at least one processor; and
at least one memory connected to the at least one processor and storing instructions which based on being executed by the at least one processor, cause the relay UE to establish a first connection with a first UE and a second connection with a second UE, for an end-to-end (e2e) connection between the first UE and the second UE via the relay UE, split a quality of service (QoS) related to the e2e connection, and report split QoS information for the split QoS to a base station (BS).

14. A method for performing communication with a relay user equipment (UE) by a base station (BS) in a wireless communication system, the method comprising:
receiving a report of split quality of service (QoS) information obtained by splitting a QoS related to an end-to-end (e2e) connection between a first UE and a second UE via the relay UE from the relay UE which establishes a first connection with the first UE and a second connection with the second UE for the e2e connection; and
transmitting resource allocation information allocated for the second connection based on the split QoS information to the relay UE.

15. A base station (BS) for performing communication with a relay user equipment (UE) in a wireless communication system, the BS comprising:
a radio frequency (RF) transceiver; and
a processor connected to the RF transceiver,
wherein the processor controls the RF transceiver to receive a report of split QoS information obtained by splitting a quality of service (QoS) related to an end-to-end (e2e) connection between a first UE and a second UE via the relay UE from the relay UE which establishes a first connection with the first UE and a second connection with the second UE for the e2e connection, and transmit resource allocation information allocated for the second connection based on the split QoS information to the relay UE.
